# EUROPÄISCHE PATENTSCHRIFT

(11) **EP 3 310 554 B1**
(45) Veröffentlichungstag und Bekanntmachung des Hinweises auf die Patenterteilung: **13.11.2019**
(21) Anmeldenummer: 16729264.8
(22) Anmeldetag: 15.06.2016
(51) Int. Cl.: B29C 64/214, B29C 64/153, B33Y 10/00, B33Y 30/00, B22F 3/105

(54) **PULVERAUFTRAGSEINHEIT FÜR EINE PBLS-ANLAGE UND VERFAHREN ZUM AUFTRAGEN VON ZWEI AUFEINANDER FOLGENDEN PULVERSCHICHTEN IN EINEM PBLS-VERFAHREN**
POWDER APPLICATION UNIT FOR A PBLM SYSTEM AND METHOD FOR APPLYING TWO SUCCESSIVE POWDER LAYERS IN A PBLM METHOD
UNITÉ D'APPLICATION DE POUDRE POUR UNE INSTALLATION PBLS ET PROCÉDÉ POUR APPLIQUER DEUX COUCHES DE POUDRE CONSÉCUTIVES ET SUPERPOSÉES DANS UN PROCÉDÉ PBLS

(30) Priorität: 19.06.2015 DE 102015109841
(43) Veröffentlichungstag der Anmeldung: 25.04.2018
(73) Patentinhaber: Aconity GmbH, 52134 Herzogenrath (DE)
(72) Erfinder: HAGEDORN, Yves, 52064 Aachen (DE); GÖRRES, Andreas, 52074 Aachen (DE)
(74) Vertreter: Moser Götze & Partner Patentanwälte mbB
(86) Internationale Anmeldenummer: PCT/EP2016/063769
(87) Internationale Veröffentlichungsnummer: WO 2016/202867

(56) Entgegenhaltungen:
- US-A1- 2008 203 621
- US-A1- 2014 084 517

## Beschreibung

Die Erfindung betrifft eine Pulverauftragseinheit für eine PBLS-Anlage gemäß Anspruch 1.

Außerdem betrifft die Erfindung ein Verfahren zum Auftragen von zwei aufeinander folgenden Pulverschichten in einem PBLS-Verfahren, gemäß Anspruch 9.

Pulverbettbasiertes Laserstrahlschmelzen (PBLS), für das auch die Bezeichnung selektives Laserschmelzen verwendet wird, gehört zur Gruppe der generativen Fertigungsverfahren, die auch als Additive Manufacturing (AM) Verfahren bezeichnet werden. PBLS ist beispielsweise aus der deutschen Patenschrift DE 196 49 865 C1 bekannt.

Als pulverbettbasiertes Verfahren ist PBLS insbesondere vom selektiven Lasersintern sowie vom Laserauftragschweißen zu unterscheiden. Beim PBLS erfolgt ein schichtweises Herstellen von Bauteilen aus einem zunächst pulverförmig vorliegenden Werkstoff, insbesondere in Form von Kunststoffen oder Metallen, der - anders als beim Laserauftragschweißen - schichtweise als ruhendes Pulverbett bereitgestellt wird und - anders als beim selektiven Lasersintern - vollständig aufgeschmolzen wird und ohne Zugabe von Bindemitteln erstarrt.

Beim PBLS-Verfahren, das auf einer entsprechenden PBLS-Anlage durchgeführt werden kann, wird mittels eines beweglichen Auftragsmediums, das beispielsweise als Bürste ausgebildet sein kann, eine erste dünne Pulverschicht des zu verarbeitenden Werkstoffs mit einer gleichmäßigen Schichtdicke von üblicherweise 10 bis 100 µm auf eine auch als Grundplatte bezeichnete Substratplatte aufgetragen. Das Auftragsmedium ist üblicherweise an einem Schieber befestigt, der zur erforderlichen Bewegung des Auftragsmediums entsprechend beweglich gelagert ist. Die Substratplatte wird von einer Trägerplatte getragen und ist auf dieser lösbar befestigt, beispielsweise angeschraubt. Die Trägerplatte und dadurch auch die Substratplatte sind hierbei zunächst in einer Ausgangslage angeordnet, in der sich die Substratplatte mit ihrer Oberfläche um den Betrag der gewünschten Schichtdicke unterhalb einer sich horizontal erstreckenden Arbeitsebene befindet. Üblicherweise bildet die Trägerplatte den beweglichen Boden eines Behälters (Bauteilbehälter), der sich mit einer dem Boden gegenüberliegenden oberen Öffnung unterhalb der Arbeitsebene an die Arbeitsebene anschließt. Hierbei ist der Boden nach Art eines Kolbens innerhalb der rechtwinklig zum Boden verlaufenden Seitenwand des Behälters eingepasst und beweglich, um zusammen mit der Substratplatte schrittweise in Bezug zur Arbeitsebene abgesenkt werden zu können. Oberhalb und parallel zur Arbeitsebene ist das Auftragsmedium über den Schieber beweglich, um das Pulver ausgehend von der Arbeitsebene auf die Trägerplatte beziehungsweise die darauf angeordnete Substratplatte zu schieben beziehungsweise aufzutragen. Beim Überfahren des Behälters überspannt das Auftragsmedium die Öffnung des Behälters vollständig, um zwischen der Trägerplatte und der Arbeitsebene eine gleichmäßige Pulverschicht mit möglichst ebener Oberfläche erzeugen zu können.

Anschließend wird das Pulver der aufgetragenen Schicht mittels eines Laserstrahls selektiv beziehungsweise lokal vollständig aufgeschmolzen, das heißt nur in nach einem 3D-CAD-Modell des zu fertigenden Bauteils ausgewählten Bereichen. Hierzu wird das 3D-CAD-Modell von einer Software in einzelne Schichten unterteilt (slicen), aus denen Bahnen nach Art von Höhenlinien des Bauteils als ausgewählte Bereiche ermittelt werden, entlang denen der Laserstrahl zum selektiven beziehungsweise lokalen Aufschmelzen der jeweiligen Pulverschicht geführt wird. Durch das vollständige Aufschmelzen und anschließende Erstarren der jeweiligen Pulverschicht erfolgt ein schichtweises Verdichten des Werkstoffs zu dem zu fertigenden Bauteil.

Ausgehend von der Ausgangslage wird die dementsprechend als Bauplattform dienende Trägerplatte beziehungsweise der Boden des Behälters nach dem entsprechenden Abtasten beziehungsweise Scannen der ausgewählten Bereiche der ersten Pulverschicht um den Betrag einer weiteren gewünschten Schichtdicke abgesenkt und eine weitere Pulverschicht auf die jeweils vorherige Schicht aufgetragen, aufgeschmolzen und hierdurch verdichtet sowie mit der vorherigen Schicht verbunden. Zumindest eine der vorherigen Schichten wird hierbei zumindest teilweise wieder aufgeschmolzen, um eine stoffschlüssige Verbindung mit der folgenden Schicht zu gewährleisten. Dieser Zyklus wiederholt sich so lange mit mehreren Pulverschichten, bis das Bauteil fertig gestellt ist. Durch das selektive Aufschmelzen ausgewählter Bereiche in jeder Pulverschicht wird in dem Behälter zwischen der Trägerplatte und der Arbeitsebene auch ein Pulverbett aus nicht aufgeschmolzenem Pulver aller aufgetragenen Schichten aufgebaut, das das Bauteil umgibt. Zur Bauteilentnahme aus dem Pulverbett wird der von der Trägerplatte gebildete Boden des Behälters in Richtung der Arbeitsebene und damit in Richtung einer dem Boden gegenüberliegenden oberen Öffnung des Behälters angehoben und die Substratplatte, mit der das Bauteil über die erste Schicht stoffschlüssig verbunden ist, von der Trägerplatte gelöst und aus der PBLS-Anlage entnommen. Das Bauteil wird anschließend von der Substratplatte getrennt, beispielswiese abgesägt. Auf diese Weise können mittels PBLS drei-dimensionale Bauteile formlos, das heißt ohne Werkzeuge oder Formen, und nahezu ohne Einschränkungen bezüglich der geometrischen Bauteilkomplexität hergestellt werden.

Um dem Auftragsmedium einer PBLS-Anlage das Pulver auf der Arbeitsebene bereit zu stellen, sind im Wesentlichen Pulverfördermechanismen nach dem Bottum Up Prinzip und nach dem Top Down Prinzip bekannt, über die das Pulver zur Arbeitsebene gefördert werden kann. Bei einem Bottum Up Mechanismus wird das Pulver von unterhalb der Arbeitsebene nach oben auf die Arbeitsebene und bei einem Top Down Mechanismus von oberhalb der Arbeitsebene nach unten auf die Arbeitsebene gefördert.

Beispielsweise sind PBLS-Anlagen mit einem Bottum Up Mechanismus bekannt, der einen Behälter (Pulverbehälter) umfasst, der analog zu dem oben beschriebenen Behälter für das Bauteil ausgebildet ist. Dementsprechend umfasst dieser Behälter ebenfalls einen nach Art eines Kolbens beweglichen Boden. Eine dem Boden gegenüberliegende obere Öffnung des Behälters ist in der Arbeitsebene angeordnet, wovon ausgehend sich der Behälter unterhalb der Arbeitsebene an die Arbeitsebene anschließt. Das in dem Behälter des Bottom Up-Pulverfördermechanismus bevorratete Pulver wird durch Anheben der den Boden bildenden Trägerplatte innerhalb des Behälters und damit einhergehende Verkleinerung des verfügbaren Volumens des Behälters in Richtung der oberen Öffnung beziehungsweise durch die dort angeordnete obere Öffnung des Behälters bewegt und damit zur Arbeitsebene gefördert und dort dem Auftragsmedium bereit gestellt. Durch umgekehrtes Absenken des Bodens wird das verfügbare Volumen des Behälters vergrößert, um darin eine entsprechende Menge an Pulver aufnehmen und bevorraten zu können.

Anders als bei Top Down Mechanismen fällt das Pulver bei einem Bottom Up Mechanismus nicht schwerkraftgetrieben in den Bereich der Arbeitsebene. Dadurch wird eine Staubbildung, die zu einer unerwünschten Verschmutzung optischer und beweglicher Bauteile der PBLS-Anlage führt, minimiert und in der Folge eine gute Prozessqualität und -stabilität gewährleistet. Darüber hinaus sind Bottum Up Mechanismen mit einem Behälter mit kolbenartig beweglichem Boden besonders einfach zu reinigen, wenn beispielsweise für einen Werkstoffwechsel das Pulver möglichst rückstandslos ausgetauscht werden muss. Dies ist bei anderen Bottom Up Mechanismen, die das Pulver beispielsweise mittels einer Förderschnecke zur Arbeitsebene befördern, mit größerem Aufwand verbunden.

Außerdem ist es bekannt, in einer PBLS-Anlage neben dem Bauteilbehälter einen so genannten Pulverüberlauf vorzusehen, in das überschüssiges Pulver hinein geschoben werden kann, das sich noch vor dem Schieber befindet, nachdem dieser zum Aufbau einer neuen Pulverschicht den Bauteilbehälter überfahren hat. Hierfür weist die Arbeitsebene neben dem Bauteilbehälter eine Ausnehmung auf, die von der Öffnung eines den Pulverüberlauf bildenden Auffangbehälters gebildet wird, der sich über die Öffnung unterhalb der Arbeitsebene an die Ausnehmung anschließt und in den das überschüssige Pulver hinein fallen kann. Durch einen solchen Pulverüberlauf kann die Prozesskammer für eine gute Prozessstabilität möglichst frei von überschüssigem Pulver gehalten werden.

Um während des Schmelzprozesses eine durch Oxidation erfolgende Kontamination des Werkstoffs zu verhindern, wird PBLS in einer Schutzgasatmosphäre durchgeführt. Dadurch können mittels PBLS relative Bauteildichten von mehr als 99% erreicht werden. Die als Schüttdichte bezeichnete relative Dichte des Pulvers beträgt hingegen etwa 50% und damit etwa die Hälfte der relativen Dichte des erzeugten Bauteils. Die relative Dichte dient somit als Maß für die Porosität des Werkstoffs in seiner jeweils vorliegenden Form, das heißt als fertiges Bauteil oder als Pulver, in Bezug auf den entsprechenden Werkstoff in einer porenfreien Form. Auch weisen die mittels PBLS gefertigten Bauteile mechanische Eigenschaften auf, die weitgehend denjenigen des Grundwerkstoffs beziehungsweise denjenigen entsprechen, die Bauteile aufweisen, die mittels konventioneller Verfahren aus dem Grundwerkstoff hergestellt werden.

Zu diesem Zweck weisen PBLS-Anlagen eine gasdichte Prozesskammer auf, in der eine entsprechende Schutzgasatmosphäre, insbesondere eine inerte Gasatmosphäre mit Argon oder Stickstoff, aufrechterhalten wird. Unmittelbar innerhalb der Prozesskammer sind üblicherweise zumindest die Arbeitsebene und das Auftragsmedium angeordnet. Auch in dem Bauteilbehälter mit der Bauplattform und der Substratplatte, dem Pulverbehälter des Bottom Up-Pulverfördermechanismus und dem Pulverüberlauf herrscht Schutzgasatmosphäre, so dass diese hierfür entsprechend gasdicht an die Prozesskammer angeschlossen sind.

Bei bekannten PBLS-Anlagen wird das zum Auftragen der Pulverschichten vorgesehene Auftragsmedium als Teil einer Pulverauftragseinheit während einer Hinfahrt ausgehend vom Pulverfördermechanismus ein erstes Mal zum Bauteilbehälter und über diesen hinweg bewegt. Hierbei wird von dem jeweiligen Pulverfördermechanismus auf der Arbeitsebene bereitgestelltes und in Fahrtrichtung der Hinfahrt gesehen vor dem Auftragsmedium mitgenommenes Pulver auf der Bauplattform des Bauteilbehälters aufgetragen. Die anschließend erfolgende Rückfahrt des Auftragsmediums in entgegengesetzter Fahrtrichtung erfolgt ohne Auftrag einer Pulverschicht auf der Bauplattform und somit als Leerfahrt ein zweites Mal über den Bauteilbehälter hinweg zurück bis zum Pulverfördermechanismus, um dort mit neuem Pulver versorgt zu werden. Überschüssiges Pulver, das nach dem ersten Überfahren der Bauplattform noch vor dem Auftragsmedium angeordnet ist, kann bei der Rückfahrt nicht mitgenommen werden und wird daher vor der Rückfahrt noch bis zum Pulverüberlauf weiter bewegt und in diesen hinein geschoben.

Bei einem so genannten 2-Wege-Auftrag werden Leerfahrten vermieden. Hierfür werden Pulverauftragseinheiten eingesetzt, die zwei voneinander beabstandete Auftragsmedien aufweisen, so dass zwischen beiden Auftragsmedien ein Aufnahmeraum für Pulver gebildet wird. In dem Aufnahmeraum kann Pulver aufgenommen und bevorratet sowie beim Überfahren der Bauplattform nach unten abgegeben werden. Sofern vor der Hinfahrt genug Pulver im Aufnahmeraum deponiert wird, kann das Pulver dadurch sowohl auf der Hinfahrt als auch auf der Rückfahrt mitgenommen und jeweils eine Pulverschicht auf der Bauplattform aufgetragen werden. Eine derartige Pulverauftragseinheit ist in Bezug auf eine Lasersintervorrichtung aus der US 2008/0203621 A1 bekannt. Die beiden Auftragsmedien dieser Pulverauftragseinheit können jeweils um eine horizontale Achse von der Arbeitsebene weggeschwenkt werden, um die Hinfahrt und Rückfahrt mit konstantem Schwenkwinkel durchzuführen. Der Schwenkwinkel kann jeweils über eine Einstellschraube eingestellt und arretiert werden.

Aus der deutschen Gebrauchsmusterschrift DE 20 2009 016 400 U1 ist eine Pulverauftragseinheit für einen 2-Wege-Pulverauftrag bekannt, bei der ein Auftragsmedium vorgesehen und insbesondere derart beweglich gelagert ist, dass dessen Abstand von einer Arbeitsebene durch eine rein translatorische Bewegung veränderlich ist.

Eine Pulverauftragseinheit für eine Anlage zum pulverbettbasierten Lasersintern ist bereits aus der EP 2 732 889 A2 bekannt. Hierbei wird das Auftragsmedium der Pulverauftragseinheit nach einer in unverschwenkter Arbeitslage erfolgenden Hinfahrt für die sich als Leerfahrt anschließende Rückfahrt von der Arbeitsebene weggeschwenkt, so dass es während der Rückfahrt gegenüber der Arbeitslage verschwenkt ist. Dadurch wird ein 2-Wege-Pulverauftrag verhindert.

Auch die US 2012/0164322 A1 offenbart eine Pulverauftragseinheit, die zwei Auftragsmedien in Form eines Schabers und in Form einer Walze aufweist. Während einer Hinfahrt wird der Schaber verschwenkt und verbleibt auch während einer sich als Leerfahrt anschließenden Rückfahrt in der verschwenkten Position. Mittels der Walze erfolgt während einer ersten Hinfahrt das Auftragen einer ersten Pulverschicht und in einer sich an die Rückfahrt anschließenden zweiten Hinfahrt ein Verdichten der Pulverschicht. Ein 2-Wege-Pulverauftrag erfolgt auch hier nicht.

Die US 6,764,636 B1 betrifft eine Stereolithographie-Anlage mit einem Auftragsmedium zum Erzeugen einer Schicht aus viskosem flüssigen Kunststoffmaterial, insbesondere Harz. Das Auftragsmedium wird nach einer Hinfahrt aus einer ersten Arbeitslage in eine zweite Arbeitslage verschwenkt und die Rückfahrt erfolgt in der von der ersten Arbeitslage abweichenden zweiten Arbeitslage.

Die US 2014/0084517 A1 offenbart eine vergleichbare Stereolithographie-Anlage, bei der das Auftragsmedium während der Hinfahrt in die ersten Arbeitslage verschwenkt ist, um mit seiner Vorderkante bereits aufgetragenes Kunststoffmaterial abzuschaben, und während der Rückfahrt in die von der ersten Arbeitslage abweichende zweite Arbeitslage verschwenkt ist, um mit seiner der Vorderkante gegenüberliegenden Hinterkante eine Schicht aus viskosem flüssigem Kunststoffmaterial aufzutragen.

Der Erfindung liegt die Aufgabe zu Grunde, eine verbesserte Pulverauftragseinheit für eine PBLS-Anlage sowie ein verbessertes Verfahren zu schaffen, die jeweils einen 2-Wege-Pulverauftrag ermöglichen.

Diese Aufgabe wird durch eine Pulverauftragseinheit mit den Merkmalen des Anspruchs 1 sowie ein Verfahren mit den Merkmalen des Anspruchs 9 gelöst. In den abhängigen Ansprüchen sind vorteilhafte Ausgestaltungen der Erfindung angegeben.

Erfindungsgemäß wird eine verbesserte Pulverauftragseinheit für eine PBLS-Anlage, wobei die Pulverauftragseinheit ein Auftragsmedium umfasst, das parallel zu einer Arbeitsebene der PBLS-Anlage beweglich gelagert ist, um Pulver entlang der Arbeitsebene bewegen zu können, wobei ein Abstand des Auftragsmediums zu der Arbeitsebene veränderlich ist, indem das Auftragsmedium um eine Schwenkachse schwenkbar gelagert ist, um das Auftragsmedium von der Arbeitsebene wegschwenken zu können, dadurch erreicht, dass die Pulverauftragseinheit ein Mittel zum Verschwenken des Auftragsmediums aufweist, das derart ausgebildet ist und mit dem Auftragsmedium derart zusammenwirkt, dass das Auftragsmedium während einer Hinfahrt zunächst unverschwenkt in einer Arbeitslage ist, so dass während der Hinfahrt in Fahrtrichtung vor dem Auftragsmedium angeordnetes Pulver in Fahrtrichtung bewegt werden kann, um eine erste Pulverschicht auf einer unterhalb der Arbeitsebene angeordneten Bauplattform aufzutragen, anschließend während der fortgeführten Hinfahrt entlang einer vorbestimmten Strecke gegenüber der Arbeitslage verschwenkt ist, so dass überschüssiges Pulver, das nach dem Auftragen der ersten Pulverschicht in Fahrtrichtung vor dem Auftragsmedium angeordnet ist überfahren werden kann, und während einer entgegengesetzten Rückfahrt entlang der vorbestimmten Strecke unverschwenkt in der Arbeitslage ist, so dass während der Rückfahrt das in einer zur Hinfahrt entgegengesetzten Fahrtrichtung vor dem Auftragsmedium angeordnete überschüssige Pulver in der entgegengesetzten Fahrtrichtung bewegt werden kann, um eine zweite Pulverschicht auf der Bauplattform aufzutragen. Eine derartige Pulverauftragseinheit weist einen einfachen Aufbau auf, da keine zwei Auftragsmedien beziehungsweise kein als Pulvervorrat der Pulverauftragseinheit dienender Aufnahmeraum erforderlich ist. Gegenüber bekannten Pulverauftragseinheiten mit nur einem Auftragsmedium und dementsprechend erforderlicher Leerfahrt bewirkt die erfindungsgemäße Pulverauftragseinheit erheblich verkürzte Nebenzeiten sowie eine entsprechende Produktivitätssteigerung. Hierbei sind bezüglich der Ausrichtung der Schwenkachse mit Ausnahme einer zur Arbeitsebene rechtwinkligen Orientierung alle Orientierungen der Schwenkachse möglich, da für das Überfahren von Pulver durch das Verschwenken ein entsprechender Abstand des Auftragsmediums zur Arbeitsebene erreicht werden muss. Besonders vorteilhaft ist die erfindungsgemäße Pulverauftragseinheit außerdem in Kombination mit einem Bottom Up-Pulverfördermechanismus, der einen Behälter (Pulverbehälter) umfasst, der einen nach Art eines Kolbens beweglichen Boden aufweist. Dies führt zu einer reduzierten Staubentwicklung gegenüber einem Top Down-Pulverfördermechanismus und zusätzlich zu einem reduzierten Reinigungsaufwand gegenüber einem Bottom Up-Pulverfördermechanismen mit einer Förderschnecke.

In vorteilhafter Weise ist vorgesehen, dass die Schwenkachse parallel zur Arbeitsebene und vorzugsweise parallel zur Längserstreckung des Auftragsmediums ausgerichtet ist. Hierdurch ist eine kompakte Bauweise möglich, insbesondere wenn das Auftragsmedium wegen einer breiten Bauplattform länglich ausgebildet ist, da für das Verschwenken entsprechend wenig Raum benötigt wird.

Das Mittel zum Verschwenken des Auftragsmediums kann ein elektrisches oder optisches Mittel beispielsweise in Form eines elektrischen Kontakts oder einer Lichtschranke sein, über die während der Hinfahrt entlang der vorbestimmten Strecke ein Antrieb angesteuert wird, der ein entsprechendes Verschwenken bewirkt.

In konstruktiv einfacher Weise kann alternativ vorgesehen sein, dass das Mittel zum Verschwenken des Auftragsmediums einen Anschlag umfasst, der die vorbestimmte Strecke definiert, indem er während der Hinfahrt entlang der vorbestimmten Strecke in Kontakt mit einer in Fahrtrichtung bewegten Komponente der Pulverauftragseinheit steht und hierdurch das Auftragsmedium verschwenkt. Zur Realisierung des 2-Wege-Pulverauftrags kann der Anschlag bewegbar gelagert sein, um für die Rückfahrt aus dem Bewegungsbereich der beweglichen Komponenten weg bewegt zu werden, damit ein Verschwenken während der Rückfahrt unterbleibt.

In konstruktiv einfacher Weise ist vorgesehen, dass die bewegte Komponente als Mitnehmer ausgebildet ist, der derart bewegbar gelagert ist, dass er aufgrund des Kontakts mit dem Anschlag relativ zu seiner Bewegung in Fahrtrichtung bewegt wird, wobei der Mitnehmer derart mit dem Auftragsmedium verbunden ist, dass eine vom Mitnehmer aufgrund des Kontakts mit dem Anschlag ausgeführte Bewegung auf das Auftragsmedium derart übertragen wird, dass das Auftragsmedium nur während der Hinfahrt um die Schwenkachse verschwenkt wird. Dadurch kann der Anschlag ortsfest im Bewegungsbereich der Pulverauftragseinheit angeordnet sein.

Des Weiteren ist vorgesehen, dass der Mitnehmer um eine Drehachse drehbar gelagert ist, wobei der Mitnehmer derart mit dem Auftragsmedium verbunden ist, dass eine vom Mitnehmer aufgrund des Kontakts mit dem Anschlag ausgeführte Drehbewegung auf das Auftragsmedium derart übertragen wird, dass das Auftragsmedium nur während der Hinfahrt um die Schwenkachse verschwenkt wird. Dies ermöglicht eine besonders einfache Bewegungskopplung des Mitnehmers und des Auftragsmediums.

Eine weiter vereinfachte Bewegungskopplung wird dadurch erreicht, dass die Drehachse parallel zur Arbeitsebene und quer, insbesondere rechtwinklig, zur Fahrtrichtung ausgerichtet ist und vorzugsweise die Schwenkachse parallel zur Drehachse ausgerichtet ist und insbesondere die Drehachse von der Schwenkachse gebildet wird und der Mitnehmer gemeinsam mit dem Auftragsmedien in der ersten Drehrichtung verschwenkt wird.

Erfindungsgemäß wird eine verbesserte und für einen 2-Wege-Pulverauftrag geeignete PBLS-Anlage mit einer Prozesskammer, die einen Kammerboden aufweist, der die Arbeitsebene der PBLS-Anlage bildet, und mit einer Pulverauftragseinheit, die in der Prozesskammer angeordnet ist, dadurch erreicht, dass die Pulverauftragseinheit nach einer der erfindungsgemäßen Ausgestaltungen ausgebildet ist. Die vorstehenden Vorteile bezüglich der Pulverauftragseinheit gelten entsprechend für eine hiermit ausgestattete PBLS-Anlage.

In konstruktiv einfacher Weise ist vorgesehen, dass das Mittel zum Verschwenken des Auftragsmediums am Kammerboden angeordnet ist, insbesondere neben einer Bauplattform der PBLS-Anlage.

Erfindungsgemäß wird ein Verfahren zum Auftragen von zwei aufeinander folgenden Pulverschichten in einem PBLS-Verfahren vorgeschlagen, umfassend die Schritte:
a) Bewegen eines in einer Arbeitslage angeordneten Auftragsmediums in einer Fahrtrichtung parallel zu einer Arbeitsebene während einer Hinfahrt, wobei während der Hinfahrt in Fahrtrichtung vor dem Auftragsmedium angeordnetes Pulver in Fahrtrichtung bewegt wird, um eine erste Pulverschicht auf einer unterhalb der Arbeitsebene angeordneten Bauplattform aufzutragen,
b) Verschwenken des Auftragsmediums aus der Arbeitslage um eine Schwenkachse nach dem Auftragen der ersten Pulverschicht auf der Bauplattform
durch die folgenden Schritte verbessert:
c) Überfahren von überschüssigem Pulver, das nach dem Auftragen der ersten Pulverschicht in Fahrtrichtung vor dem Auftragsmedium angeordnet ist
d) Verschwenken des Auftragsmediums um die Schwenkachse in eine Arbeitslage nach dem Überfahren des überschüssigen Pulvers
e) Bewegen des in der Arbeitslage angeordneten Auftragsmediums in einer zur Hinfahrt entgegengesetzten Fahrtrichtung parallel zu der Arbeitsebene während einer Rückfahrt, wobei während der Rückfahrt das in der entgegengesetzten Fahrtrichtung vor dem Auftragsmedium angeordnete überschüssige Pulver in der entgegengesetzten Fahrtrichtung bewegt wird, um eine zweite Pulverschicht auf der Bauplattform aufzutragen.

Ein derartiges Verfahren weist die zuvor in Bezug auf die erfindungsgemäße Pulverauftragseinheit dargelegten Vorteile auf.

Nachfolgend wird ein Ausführungsbeispiel der Erfindung an Hand der Zeichnungen näher erläutert. Es zeigen:
Figur 1 eine schematische Darstellung einer PBLS-Anlage mit vollständig geöffneter Prozesskammer,
Figur 1a eine Seitenansicht der PBLS-Anlage gemäß Figur 1 mit vollständig geschlossener Prozesskammer
Figur 1b eine Ansicht einer Innenseite des Deckels der Prozesskammer der PBLS-Anlage gemäß Figur 1,
Figur 2 eine Ansicht einer Pulverauftragseinheit in ihrer Arbeitsposition bei vollständig geschlossener Prozesskammer zu Beginn der Hinfahrt des Auftragsmediums,
Figur 3 eine Ansicht der Pulverauftragseinheit gemäß Figur 2 beim Überfahren eines Anschlags zum Verschwenken des Auftragsmediums am Ende der Hinfahrt,
Figur 4 eine Ansicht der Pulverauftragseinheit gemäß Figur 2 nach dem Überfahren des Anschlags zu Beginn der Rückfahrt des Auftragsmediums und
Figur 5 eine Ansicht der Pulverauftragseinheit gemäß Figur 2 beim Überfahren des Anschlags während der Rückfahrt.

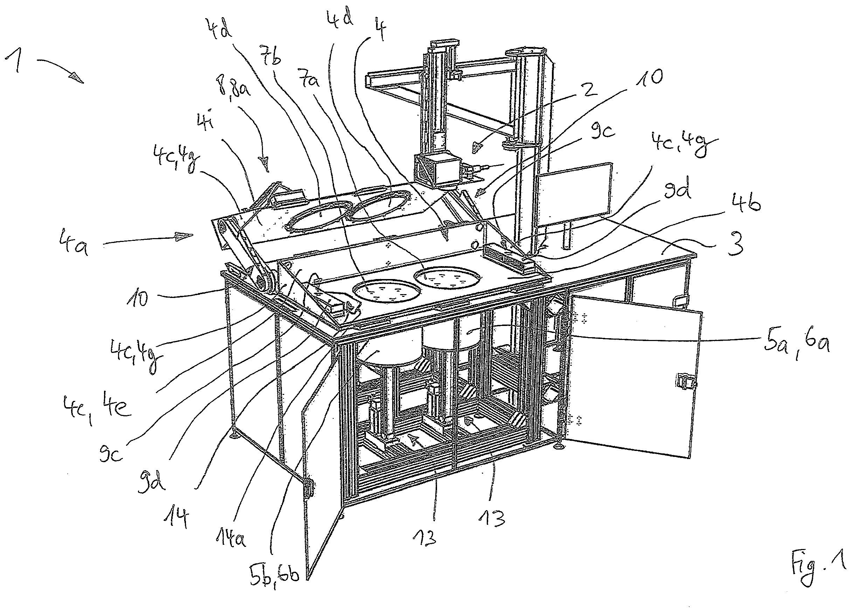

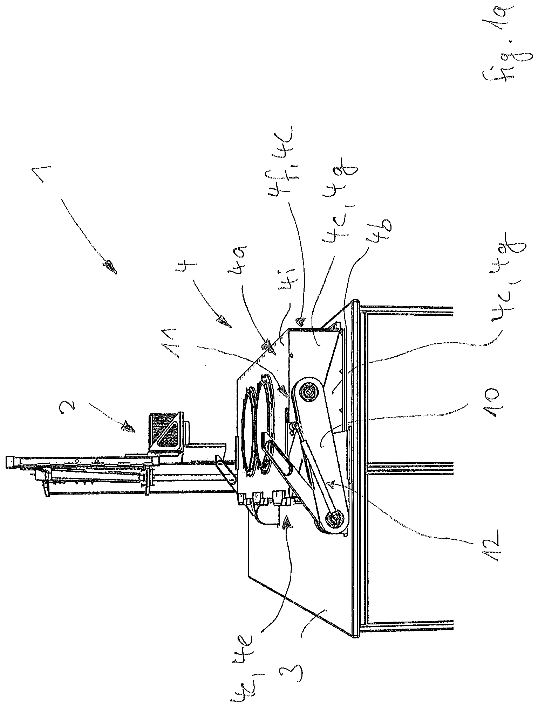

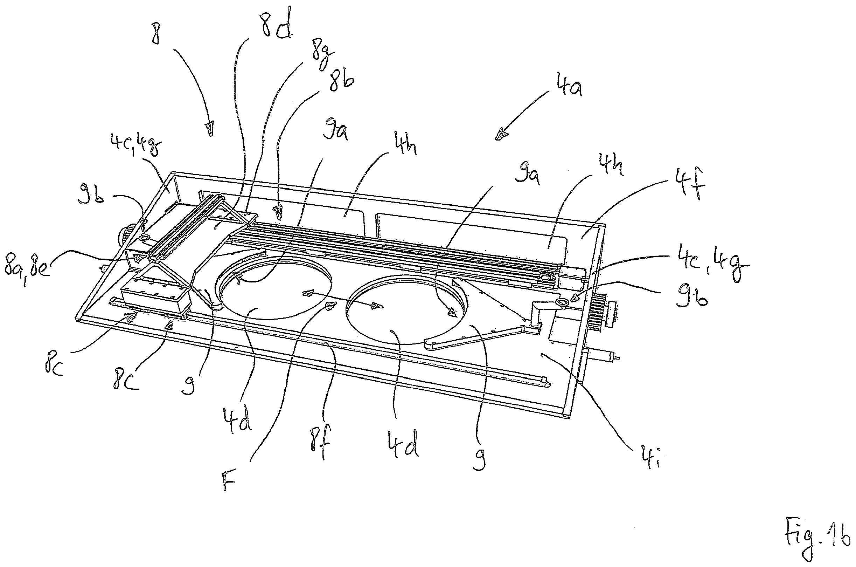

Die Figur 1 zeigt eine Ansicht einer PBLS-Anlage 1 mit einem Bottom Up-Pulverfördermechanismus. Die PBLS-Anlage 1 ist als so genanntes Einscannersystem ausgebildet und umfasst dementsprechend nur eine Scannereinheit 2 mit einem Laser. Grundsätzlich ist die PBLS-Anlage 1 jedoch nicht auf Laser beschränkt, da anstelle eines Lasers auch eine andere Einrichtung verwendet werden kann, die eine zum selektiven Aufschmelzen des jeweiligen Werkstoffs geeignete elektromagnetische Strahlung erzeugen kann, beispielsweise Electron Beam Melting (EBM). Außerdem weist die PBLS-Anlage 1 einen gestellartigen Tisch 3 auf, der eine gehäuseartig ausgebildete Prozesskammer 4 trägt. Die Prozesskammer 4 hat einen im Wesentlichen kastenförmigen beziehungsweise quaderförmigen Aufbau mit einer als bewegbarer Deckel 4a ausgebildeten Kammerdecke 4i, einem Kammerboden 4b und vier Seitenwänden 4c. Die vier Seitenwände 4c sind dementsprechend jeweils rechteckförmig ausgebildet und werden gebildet von einer Rückwand 4e, einer dieser gegenüberliegenden Vorderwand 4f (siehe Figuren 1a und 1b) und zwei Stirnwänden 4g. An ihrer Unterseite ist die Prozesskammer 4 über den Kammerboden 4b mit dem Tisch 3 verbunden. Der Deckel 4a umfasst zumindest die Kammerdecke 4i und ist zum Öffnen oder Verschließen der Prozesskammer 4 relativ zu dem Kammerboden 4b sowie zu dem Tisch 3 zwischen einer in der Figur 1 dargestellten offenen und einer in Figur 1a dargestellten geschlossenen Position bewegbar. Der Deckel 4a dient somit in der geschlossenen Position zum Verschließen der Prozesskammer 4 in ihrem oberen Bereich beziehungsweise in der offenen Position dazu, dass die Prozesskammer 4 von oben zugänglich ist. In diesem Sinne ist der Deckel 4a nicht mit einer etwaigen Seitentür an einer der Seitenwände 4c gleichzusetzen.

Um das PBLS-Verfahren durchführen zu können, muss der Deckel 4a in der geschlossenen Position sein. Nur dann ist die Prozesskammer 4 gasdicht gegenüber ihrer Umgebung verschlossen, so dass wie eingangs beschrieben über eine nicht dargestellte Schutzgaszuführung die zur Durchführung des PBLS-Verfahrens erforderliche Schutzgasatmosphäre in der Prozesskammer 4 hergestellt und aufrechterhalten werden kann.

Über den Tisch 3 kann die PBLS-Anlage 1 auf einem Boden aufgestellt werden. Die vollständig, insbesondere einschließlich der optischen Komponenten zur definierten Einkopplung der Laserstrahlung, außerhalb der Prozesskammer 4 angeordnete Scannereinheit 2 kann mit dem Tisch 3 verbunden sein und sich hieran abstützen und/oder wie in Figur 1 angedeutet separat auf dem Boden aufgeständert sein. Außerdem ist die Scannereinheit 2 oberhalb der Prozesskammer 4 und/oder neben die Prozesskammer 4 verschwenkbar und umgekehrt für den laufenden Betrieb der PBLS-Anlage 1 über die Prozesskammer 4 zurück verschwenkbar. Der Laserstrahl der entsprechend zurück geschwenkten und somit über der Prozesskammer 4 angeordneten Scannereinheit 2 wird dann über eines von zwei im Deckel 4a beziehungsweise der Kammerdecke 4i vorgesehenen Einkoppelgläsern 4d (siehe auch Figur 1b) in die Prozesskammer 4 eingekoppelt und zu den ausgewählten Bereichen im Bereich der aufzuschmelzenden Pulverschicht geführt. Die PBLS-Anlage 1 kann jedoch nicht nur als Einscannersystem mit einer Scannereinheit 2, sondern auch als Multiscannersystem, insbesondere als Zweiscannersystem mit zwei Scannereinheit 2, ausgebildet sein. Dementsprechend muss zumindest ein weiterer Laserstrahl über eines der Einkoppelgläser 4d in die Prozesskammer eingekoppelt werden, wobei auch mehrere Laserstrahlen durch ein Einkoppelglas 4d eingekoppelt werden können.

Innerhalb der Prozesskammer 4 ist eine sich horizontal erstreckende Arbeitsebene angeordnet, die im Wesentlichen von dem Kammerboden 4b beziehungsweise dessen Oberfläche gebildet und rechteckförmig durch die Seitenwände 4c begrenzt wird.

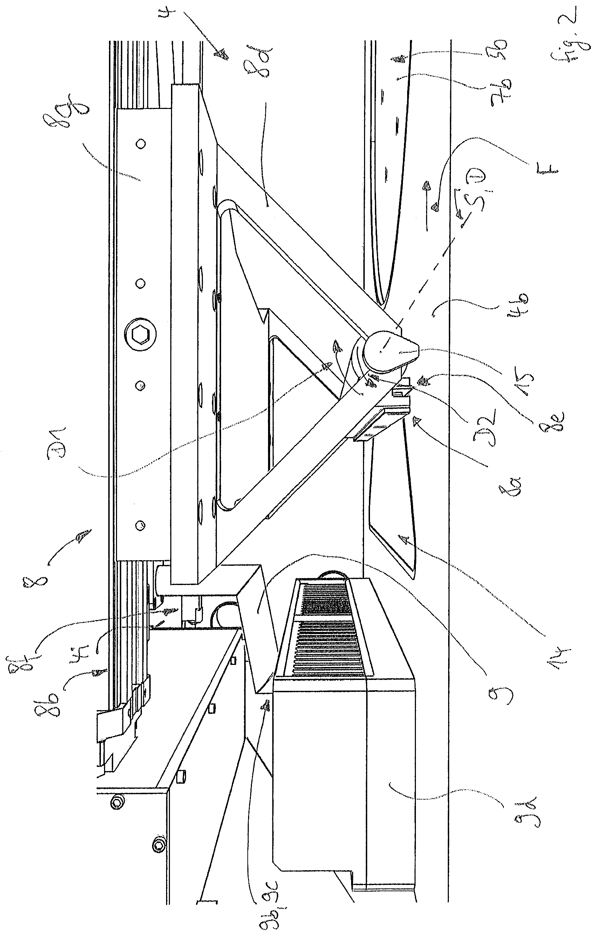

In der Prozesskammer 4, das heißt in einem von der geschlossenen Prozesskammer 4 umschlossenen Raum, ist außerdem eine Pulverauftragseinheit 8 mit einem über einen stabförmigen Schieber 8a parallel zur Arbeitsebene beweglichen Auftragsmedium in Form einer Bürste 8e angeordnet. Die Pulverauftragseinheit 8 ist an einer Innenseite des Deckels 4a befestigt (siehe auch Figur 1b) und dadurch beim Öffnen der Prozesskammer 4 gemeinsam mit dem Deckel 4a zwischen der offenen Position (siehe Figur 1) und der geschlossenen Position (siehe Figur 1a) bewegbar. Die Pulverauftragseinheit 8 ist hierbei in der geschlossenen Position des Deckels 4a und insbesondere im laufenden Betrieb der PBLS-Anlage 1 so angeordnet, dass der Schieber 8a oberhalb der Arbeitsebene und parallel hierzu in einer Fahrtrichtung F hin und her verfahrbar ist (siehe Figuren 2 bis 5), um mittels des am Schieber 8a befestigten Auftragsmediums auf der Bauplattform sowie einer hiervon getragenen Substratplatte der PBLS-Anlage 1 einen gleichmäßigen Pulverauftrag zu verwirklichen. Die geschlossene Position des Deckels 4a entspricht einer Arbeitsposition der Pulverauftragseinheit 8, wobei die Pulverauftragseinheit 8 von dem Deckel 4a in Richtung des Kammerbodens 4b herabhängt. Aufgrund der Befestigung der Pulverauftragseinheit 8 am Deckel 4a ist keine Befestigung am Kammerboden 4b vorgesehen, so dass dieser frei von Komponenten der Pulverauftragseinheit 8 ist. Der in Form von Pulver vorliegende Werkstoff zur Herstellung eines Bauteils wird dem Auftragsmedium hierfür von einem unten näher beschriebenen Bottom Up-Pulverfördermechanismus im Bereich der Arbeitsebene bereitgestellt. Weitere Details zur Prozesskammer 4 und der Pulverauftragseinheit 8 werden unten näher beschrieben.

Zwischen ihren beiden Enden wird die Arbeitsebene nicht ausschließlich vom Kammerboden 4b gebildet, da im Kammerboden 4b und damit auch in der Arbeitsebene drei in Fahrtrichtung F gesehen nebeneinander und voneinander beabstandet angeordnete Ausnehmungen vorgesehen sind.

An eine der beiden äußeren Ausnehmungen schließt sich unterhalb der Arbeitsebene ein als Pulverüberlauf für überschüssiges Pulver dienender und lösbar befestigter Auffangbehälter 14 an. Die entsprechende Ausnehmung wird durch eine obere Öffnung des Auffangbehälters 14 beziehungsweise eine sich zu deren Ausbildung zumindest mit ihrer Innenseite rechtwinklig von der Arbeitsebene nach unten erstreckende Seitenwand 14a des Auffangbehälters 14 oder durch ein entsprechend ausgebildetes Zwischenstück begrenzt, das die Ausnehmung mit dem Auffangbehälter 14 beziehungsweise dessen oberer Öffnung verbindet. Der Auffangbehälter 14 ist an einem der gegenüberliegenden Enden der Arbeitsebene angeordnet, zwischen denen der Schieber 8a mit dem Auftragsmedium in der geschlossenen Position des Deckels 4a verfährt. Die Grundfläche des Auffangbehälters 14 ist im Wesentlichen trapezförmig ausgebildet. Hierbei erstreckt sich die entsprechend längliche und schmale Grundfläche mit ihrer Längserstreckung quer zur Fahrtrichtung F und damit parallel zur Längserstreckung des Auftragsmediums und des Schiebers 8a.

An die andere der beiden äußeren Ausnehmungen schließt sich unterhalb der Arbeitsebene ein erster Behälter 5a und an die innere der drei Ausnehmungen ein zweiter Behälter 5b im eingangs beschriebenen Sinne an. Hierbei schließen sich beide Behälter 5a, 5b mit ihren oberen Öffnungen über die jeweilige Ausnehmung an die Arbeitsebene an und begrenzen diese dadurch. Beide Behälter 5a und 5b sind gleichartig aufgebaut und umfassen hierbei eine erste beziehungsweise zweite Seitenwand 6a beziehungsweise 6b, deren Innenseite rechtwinklig zur Arbeitsebene und hiervon weg verläuft. Innerhalb jeder Seitenwand 6a, 6b ist eine der entsprechenden oberen Öffnung gegenüberliegende erste beziehungsweise zweite Trägerplatte 7a beziehungsweise 7b nach Art eines Kolbens eingepasst und beweglich angeordnet, um den entsprechenden Boden des Behälters 5a, 5b zu bilden. Die Behälter 5a, 5b weisen jeweils eine Grundfläche auf. Entsprechend der Grundfläche ist die jeweilige Seitenwand 6a, 6b und der von der Trägerplatte 7a, 7b gebildete Boden ausgebildet. Vorliegend sind die Seitenwände 6a, 6b zylinderförmig ausgebildet, so dass die Behälter 5a, 5b eine Art Zylinder-Kolben-Einheit ausbilden.

Die Behälter 5a, 5b können eine runde, insbesondere wie in Figur 1 dargestellt eine kreisrunde oder auch ovale Grundfläche aufweisen. Alternativ sind jedoch auch Behälter 5a, 5b mit eckigen oder rechteckigen Grundflächen denkbar oder mit Grundflächen, die sowohl runde als auch gerade Seitenkanten aufweisen. Die Seitenwände 6a, 6b sowie die Trägerplatten 7a, 7b sind entsprechend der Grundfläche ausgebildet und in die Trägerplatten 7a, 7b sind zudem in die jeweiligen Seitenwände 6a, 6b eingepasst, um ihre oben beschriebene Funktion als Kolben zu erfüllen. Hierbei erstrecken sich die Trägerplatten 7a, 7b mit ihrer Oberfläche jeweils entsprechend der Grundfläche parallel zur Arbeitsebene und rechtwinklig zu den Seitenwänden 6a, 6b. Die Grundflächen der Behälter 5a, 5b müssen nicht wie im vorliegenden Ausführungsbeispiel identisch ausgebildet sein, sondern auch ungleiche und ungleich große Grundflächen sind denkbar. Üblicherweise ist jedoch die Grundfläche jedes Auffangbehälters 14 kleiner als die Grundfläche des als Bauteilbehälter betriebenen ersten Behälters 5a.

Die Trägerplatten 7a, 7b sind über schematisch dargestellte Antriebe 13, die beispielsweise als elektromechanische Hubzylinder, Kugelgewindetriebe, Riementriebe, pneumatische oder hydraulische Antriebe ausgebildet sind, innerhalb des jeweiligen Behälters 5a, 5b beziehungsweise deren Seitenwänden 6a, 5b in einer rein translatorischen beziehungsweise linearen Bewegung in bezüglich der Arbeitsebene senkrechter Richtung mit der nötigen Genauigkeit zur Generierung der gewünschten Schichtdicke heb- und senkbar.

Die erste Trägerplatte 7a dient als Bauplattform und wird während der Durchführung des PBLS-Verfahrens wie eingangs beschrieben gemeinsam mit der nicht dargestellten Substratplatte ausgehend von einer Ausgangslage abgesenkt, wobei das zu fertigende Bauteil und das Pulverbett auf der ersten Trägerplatte 7a beziehungsweise der darauf befestigten Substratplatte aufgebaut und hiervon innerhalb des Behälters 5a getragen werden. Um die Substratplatte an der Trägerplatte 7a anschrauben zu können, weist die Trägerplatte 7a entsprechende Bohrungen auf. Der zweite Behälter 5b ist Teil des Bottom Up-Pulverfördermechanismus und dient hierbei auch als Vorratsbehälter für Pulver, wobei die zweite Trägerplatte 7b während der Durchführung des PBLS-Verfahrens wie eingangs beschrieben in Richtung der Arbeitsebene angehoben wird, um Pulver zur Arbeitsebene zu fördern, das unterhalb der Arbeitsebene in dem zweiten Behälter 5b bevorratet ist. Durch umgekehrtes Absenken der zweiten Trägerplatte 7b wird das Volumen des zweiten Behälters 5b vergrößert, um eine entsprechende Menge neuen Pulvers aufnehmen und bevorraten zu können. Die Menge des aufnehmbaren Pulvers ist hierbei begrenzt durch das Volumen des zweiten Behälter 5b bei maximal abgesenkter Trägerplatte 7b entsprechend der maximalen Hubhöhe. In Figur 1 sind die beiden Trägerplatten 7a, 7b jeweils in einer angehobenen Position im Bereich der Arbeitsebene dargestellt.

Zur Beladung beziehungsweise Befüllung der PBLS-Anlage 1 mit pulverförmigem Werkstoff kann ein derartiger Bottom Up-Pulverfördermechanismus beziehungsweise dessen Behälter durch seine obere Öffnung und die zugehörige Ausnehmung in der Arbeitsebene befüllt werden. Hierfür ist die Prozesskammer 4 zu öffnen.

Dadurch, dass die Behälter 5a, 5b und der Auffangbehälter 14 über die jeweilige Ausnehmung im Kammerboden 4b mit der Prozesskammer 4 verbunden sind, ist bei der Durchführung des PBLS-Verfahrens die Schutzgasatmosphäre auch dort aufrechtzuerhalten und die jeweilige Verbindung entsprechend gasdicht ausgebildet. Auch die Behälter 5a, 5b sowie der Auffangbehälter 14 selbst sind gasdicht gegenüber ihrer Umgebung ausgebildet.

In der Figur 1a ist eine Seitenansicht der PBLS-Anlage 1 gemäß Figur 1 mit vollständig geschlossener Prozesskammer 4 dargestellt. Ausgehend von der Figur 1, in der der Deckel 4a in der offenen Position abgebildet ist und mit seiner Innenseite schräg nach oben und von der PBLS-Anlage 1 und insbesondere vom Kammerboden 4b weg zeigt, wurde der Deckel 4a gemeinsam mit der an der Innenseite befestigten Pulverauftragseinheit 8 in die geschlossene Position bewegt. Um den Deckel 4a in die in Figur 1a gezeigte geschlossene Position sowie zurück in die offene Position bewegen zu können, ist der Deckel 4a entsprechend bewegbar, insbesondere gelenkig und somit schwenkbar, gelagert. Hierfür umfasst die PBLS-Anlage 1 einen Schwenkmechanismus, zwischen dessen beiden Schwenkarmen 10 (siehe auch Figur 1) der Deckel 4a und damit auch die Pulverauftragseinheit 8 drehbar gelagert ist. Über einen vorzugsweise formschlüssigen Zugmitteltrieb 11, beispielsweise in Form eines Zahnriementriebs oder Kettengetriebes, und/oder eine Krafteinrichtung 12, beispielsweise in Form eines Federelements, vorzugsweise in Form einer Gasdruckfeder, eines hydraulischen oder pneumatischen Antriebs, insbesondere Hubzylinders, oder eines linear wirkenden elektrischen Antriebs, die jeweils an dem Deckel 4a und an einem Festpunkt der PBLS-Anlage 1 angreifen, kann der Deckel 4a manuell oder automatisch zwischen der offenen und der geschlossenen Position verschwenkt werden.

Die Figur 1b zeigt eine Ansicht einer Innenseite des Deckels 4a der Prozesskammer 4 der PBLS-Anlage 1. An der dargestellten Innenseite des Deckels 4a ist die Pulverauftragseinheit 8 an der Kammerdecke 4i befestigt. Außerdem ist die gesamte Vorderwand 4f an der Kammerdecke 4i befestigt, um den Deckel 4a zu bilden und gemeinsam zwischen der offenen und der geschlossenen Position bewegbar zu sein. Dadurch ist die Vorderwand 4f nur in der geschlossenen Position mit dem Kammerboden 4b und den übrigen angrenzenden Seitenwänden 4c verbunden und in allen anderen Positionen hiervon beabstandet. Dementsprechend ist der Kammerboden 4b insbesondere in der offenen Position im entsprechenden Bereich auf Höhe der Arbeitsebene kantenfrei und damit barrierefrei zugänglich. Dies ermöglicht eine besonders einfache Reinigung der Prozesskammer 4.

Zusätzlich ist jede Stirnwand 4g zweigeteilt, von denen jeweils ein Teil ebenfalls als Teil des Deckels 4a an der Kammerdecke 4i befestigt ist. Die hierzu komplementären am Kammerboden 4b befestigten Teile der Stirnwände 4g (siehe Figuren 1) flachen ausgehend von der Rückwand 4e ab. Beide Teile bilden in der geschlossenen Position eine vollständige rechteckförmige Stirnwand 4g (siehe Figur 1a). Außerdem ist zumindest ein Sichtfenster 4h in einer der Seitenwände 4c angeordnet, beispielsweise wie in Figur 1b gezeigt zwei Sichtfenster 4h in der Vorderwand 4f, durch die in der geschlossenen Position in die Prozesskammer 4 hinein gesehen werden kann.

Um beim PBLS-Verfahren entstehendes Rauchgas, das insbesondere Rußpartikel des aufgeschmolzenen Pulvers enthält und die in die Prozesskammer 4 eingekoppelte Laserstrahlung schwächt, zuverlässig absaugen zu können, ist eine zweigeteilte Rauchgasabsaugung vorgesehen. Die Rauchgasabsaugung ist Teil eines Filtersystems zur Filterung eines das Rauchgas der PBLS-Anlage 1 enthaltenden und durch die PBLS-Anlage 1 geführten Volumenstroms . Innerhalb der Prozesskammer 4 wird der Volumenstrom in einen entlang der Einkoppelgläser 4d geführten ersten Volumenstrom und einen entlang der Arbeitsebene geführten zweiten Volumenstrom aufgeteilt. Beide Volumenströme sind zumindest im Bereich der Einkoppelgläser 4d beziehungsweise des Kammerbodens 4b möglichst homogen und laminar sowie zueinander parallel ausgebildet. Hierfür ist in Fahrtrichtung F gesehen an gegenüberliegenden Enden der Prozesskammer 4 am Kammerboden 4b jeweils eine Leiste 9d (siehe Figur 1) der Rauchgasabsaugung vorgesehen.

Ein für den ersten Volumenstrom am Deckel 4a befestigter erster Teil der Rauchgasabsaugung umfasst für jedes Einkoppelglas 4d einen flachen und trichterförmig ausgebildeten Kanal 9, der ausgehend von einer an dem entsprechenden Einkoppelglas 4d angeordneten ersten Öffnung 9a entlang des Deckels 4a in Richtung der Stirnwand 4g verläuft. Hierbei erstreckt sich die Öffnung 9a in etwa über die Breite des Einkoppelglases 4d. In Richtung der Stirnwand 4g verjüngt sich der Kanal 9, verläuft anschließend rohrförmig, insbesondere rechtwinklig, vom Deckel 4a weg und endet mit einer zweiten Öffnung 9b. Sämtliche am Deckel 4a befestigten Komponenten der Rauchgasabsaugung sind außerhalb des Bewegungsbereichs der Pulverauftragseinheit 8 angeordnet, wobei der trichterförmige Bereich des Kanals 9 zwischen dem Deckel 4a und den in Fahrtrichtung F beweglichen Komponenten der Pulverauftragseinheit 8 angeordnet ist. Zwischen den beiden Öffnungen 9a verläuft der erste Volumenstrom außerhalb des Kanals 9 und parallel zur Kammerdecke 4i durch die Prozesskammer 4, um Rauchgas aus dem Bereich der Einkoppelgläser 4d aus der Prozesskammer 4 abzuführen. Die Rauchgasabsaugung im Bereich der Einkoppelgläser 4d ist wichtig, um zu verhindern, dass diese durch rauchgasbedingte Ablagerungen verschmutzt werden und die Leistung des eingekoppelten Laserstrahls mindern oder dass diese durch erhöhte Absorption der Laserstrahlung am Schmutz aufgrund hiermit einhergehender starker lokaler Erhitzung zerstört werden.

Ein für den zweiten Volumenstrom vorgesehener zweiter Teil der Rauchgasabsaugung wird von zwei einander zugewandten Einmündungen gebildet, von denen jeweils eine in einer der beiden Leisten 9d ausgebildet ist. Zwischen den beiden Einmündungen wird der zweite Volumenstrom im Bereich des Kammerbodens 4b durch die Prozesskammer 4 geführt, um auch Rauchgas aus dem Bereich der Arbeitsebene aus der Prozesskammer 4 abzuführen.

Um den in die Prozesskammer 4 geführten Volumenstrom aufzuteilen beziehungsweise die beiden Volumenströme wieder zu einem gemeinsam durch das Filtersystem geführten Volumenstrom zu vereinigen, weist jede Leiste 9d eine dritte Öffnung 9c auf, die bei geschlossenem Deckel 4a mit der zweiten Öffnung 9b des rohrförmigen Teils des Kanals 9 zusammentrifft (siehe Figur 2). Der Volumenstrom wird von derjenigen Leiste 9d in die Prozesskammer 4 eingeströmt und getrennt, die vom Bauteilbehälter weiter entfernt angeordnet ist. Von der näher am Bauteilbehälter angeordneten Leiste 9d werden die beiden Volumenströme wieder zusammengeführt und aus der Prozesskammer 4 heraus geführt, um gefiltert zu werden. Nach dem Filtern wird der gefilterte Volumenstrom über die Einmündung der anderen Leiste 9d zurück in die Prozesskammer 4 geführt und entsprechend aufgeteilt.

Die Pulverauftragseinheit 8 umfasst neben dem Schieber 8a für das Auftragsmedium auch eine lineare Antriebseinheit 8b mit einem Motor. Die Antriebseinheit 8b ist vorzugsweise vollständig an der Kammerdecke 4i, gegebenenfalls auch teilweise an einer oder mehreren hieran befestigten Seitenwänden 4c, befestigt und erstreckt sich schienenförmig in Fahrtrichtung F und hierbei vorzugsweise parallel zu einer von der Kammerdecke 4i gebildeten Ebene sowie vorzugsweise auch parallel zur Vorderwand 4f. Sowohl der Schieber 8a als auch das Auftragsmedium erstrecken sich in der geschlossenen Position des Deckels 4a mit ihrer Längserstreckung parallel zur Arbeitsebene und im Wesentlichen quer, insbesondere rechtwinklig, zur Fahrtrichtung F. Über einen von der Antriebseinheit 8b angetriebenen Antriebsschlitten 8g ist eine Traverse 8d, an der der Schieber 8a mit dem Auftragsmedium gelagert ist, in der Fahrtrichtung F zwischen gegenüberliegenden Enden des Deckels 4a, die von den beiden Stirnwänden 4g beziehungsweise deren mit der Kammerdecke 4i verbundenen Teile gebildet werden, translatorisch hin und her verfahrbar. Hierbei ist die Traverse 8d mit einem ihrer beiden Enden mit dem Antriebsschlitten 8g und mit dem gegenüberliegenden anderen Ende zur Aufnahme von Querkräften mit zwei Führungswagen 8c verbunden. Die zwei Führungswagen 8c sind hierfür in festem Abstand in Fahrtrichtung F hintereinander angeordnet und entlang einer als Führung dienenden und sich geradlinig im Sinne einer Linearführung erstreckenden Führungsschiene 8f verfahrbar. Die Führungsschiene 8f ist analog zur Antriebseinheit 8b an der Kammerdecke 4i befestigt und erstreckt sich von der Antriebseinheit 8b beabstandet und parallel hierzu sowie vorzugsweise parallel zu der von der Kammerdecke 4i gebildeten Ebene. Dadurch ist die Fahrtrichtung F in jeder Position des Deckels 4a beziehungsweise der Pulverauftragseinheit 8 parallel zu der von der Kammerdecke 4i gebildeten Ebene sowie parallel zur Arbeitsebene. Zumindest in der geschlossenen Position des Deckels 4a liegt die von der Kammerdecke 4i gebildete Ebene auch parallel zu der horizontalen Arbeitsebene.

Durch diesen Aufbau beziehungsweise die Befestigung der Pulverauftragseinheit 8 oberhalb der Arbeitsebene und insbesondere an der Kammerdecke 4i beziehungsweise dem Deckel 4a hängt die Pulverauftragseinheit 8 in der Arbeitsposition, das heißt in der geschlossenen Position des Deckels 4a, von der Kammerdecke 4i beziehungsweise vom Deckel 4a zu der Arbeitsebene herab.

Zwischen der linearen Antriebseinheit 8b und der Führungsschiene 8f sind die beiden Einkoppelgläser 4d angeordnet, wodurch bei geschlossenem Deckel 4a jeweils zumindest ein Laserstrahl eingekoppelt und zu dem entsprechenden Behälter 5a beziehungsweise 5b geführt werden kann. Auch ist durch die Einkoppelgläser 4d ein Einblick in die Prozesskammer 4 und auf die Arbeitsebene möglich. Es ist jedoch ebenso denkbar, dass nur ein entsprechend größer dimensioniertes Einkoppelglas 4d vorgesehen ist, um mit den Laserstrahlen mindestens die Trägerplatten 7a, 7b beziehungsweise Substratplatten der beiden Behälter 5a, 5b zu erreichen, sofern es sich bei der PBLS-Anlage 1 um ein Multiscannersystem handelt.

In der Figur 2 ist eine Ansicht der Pulverauftragseinheit 8 in ihrer zuvor beschriebenen Arbeitsposition bei vollständig geschlossener Prozesskammer 4 zu Beginn der Hinfahrt des Auftragsmediums dargestellt. Erkennbar ist der Antriebsschlitten 8b, über den die Traverse 8d antriebsmäßig mit der Antriebseinheit 8b verbunden ist. Die Traverse 8d und der hiervon getragene Schieber 8a hängen in Richtung des Kammerbodens 4b herab und sind dementsprechend zwischen der Führungsschiene 8f beziehungsweise der Antriebseinheit 8b und dem Kammerboden 4b angeordnet. Keine der zuvor genannten Komponenten der Pulverauftragseinheit 8 ist somit am Kammerboden 4b beziehungsweise der Arbeitsebene befestigt, sondern hiervon möglichst weit entfernt, damit eine Verunreinigung im Bereich der beweglichen Komponenten beziehungsweise Führungskomponenten, insbesondere der in Figur 2 verdeckten und daher nicht dargestellten Verbindung der Führungswagen 8c mit der Führungsschiene 8c und des Antriebsschlittens 8g mit der Antriebseinheit 8b, durch Pulver minimiert wird.

In der für den laufenden Betrieb der PBLS-Anlage 1 geschlossenen Position des Deckels 4a ist die Pulverauftragseinheit 8 in der Arbeitsposition, wobei sich zumindest das Auftragsmedium parallel zur Substratplatte und zur Arbeitsebene erstreckt, so dass auf der Bauplattform der PBLS-Anlage 1 in Fahrtrichtung F ein gleichmäßiger Pulverauftrag mit möglichst ebener und zur Substratplatte sowie zur Arbeitsebene paralleler Oberfläche der jeweiligen Pulverschicht verwirklicht werden kann. Um das Auftragsmedium parallel zu der Oberfläche der Substratplatte beziehungsweise der Arbeitsebene ausrichten oder auch leicht wechseln zu können, weist der Schieber 8a einen Klemmhalter auf, an dem beziehungsweise über das das entsprechende Auftragsmedium lösbar befestigt und entsprechend ausgerichtet werden kann. Hierfür ist jedes Einkoppelglas 4d lösbar befestigt und abnehmbar, so dass nach deren Abnahme von der Kammerdecke 4i die Pulverauftragseinheit in der Prozesskammer 4 auch bei geschlossener Position des Deckels 4a für ein entsprechendes Ausrichten zugänglich ist. Vorzugsweise erstrecken sich auch die Antriebseinheit 8b und die Führungsschiene 8f parallel zur Arbeitsebene. Alternativ kann der Schieber 8a mit dem Auftragsmedium auch um eine gegenüber der Arbeitsebene rechtwinklige und beispielsweise zwischen den beiden Behältern 5a, 5b angeordnete Achse drehbar gelagert sein, wobei die Antriebseinheit 8b einen entsprechenden Drehantrieb darstellt.

Die als Auftragsmedium dienende und über den Schieber 8a beziehungsweise Führungswagen 8c bewegliche Bürste 8e erstreckt sich durchgehend entlang der Längserstreckung des Schiebers 8a sowie in der Arbeitsposition zwischen dem Schieber 8a und der Arbeitsebene beziehungsweise dem Kammerboden 4b. Vorzugsweise erstreckt sich die Bürste 8e in der Arbeitsposition und während der Durchführung des PBLS-Verfahrens bis zur Arbeitsebene beziehungsweise zum Kammerboden 4b und berührt diese, um in der jeweiligen Fahrtrichtung F gesehen vor dem Schieber 8a beziehungsweise der Bürste 8e liegendes Pulver möglichst vollständig mitzunehmen und zugleich eine möglichst ebene Oberfläche der Pulverschicht auf Höhe der Arbeitsebene zu erzeugen. Durch die zusammenhängende Ausdehnung der Bürste 8e entlang der Längserstreckung des Schiebers 8a wird eine wirksame Länge definiert. Nur im Bereich der wirksamen Länge kann das Auftragsmedium Pulver mitnehmen und gleichmäßig auftragen. Die wirksame Länge kann auch von mehr als einer Bürste 8e gebildet werden, sofern diese entsprechend nah nebeneinander positioniert sind.

Die wirksame Länge des Auftragsmediums ist in der geschlossenen Position des Deckels 4a deckungsgleich oder kürzer gegenüber der entsprechenden Längserstreckung der Grundfläche des Auffangbehälters 14, damit das überschüssige Pulver möglichst restlos in den Pulverüberlauf geschoben werden kann, ohne sich auf der Arbeitsebene an den Rändern des jeweiligen Pulverüberlaufs zu sammeln. Um eine gleichmäßige Pulverschicht erzeugen zu können, überspannt der Schieber 8a mit seiner von dem Auftragsmedium gebildeten wirksamen Länge jedoch zumindest in der Arbeitsposition den ersten Behälter 5a für das Bauteil vollständig, vorzugsweise auch den zweiten Behälter 5b des Bottom Up-Pulverfördermechanismus. Dadurch dient das Auftragsmedium nicht nur zum Schieben von Pulver auf die erste Trägerplatte 7a beziehungsweise die Substratplatte, sondern auch als Mittel zum Glätten der hierdurch in der gewünschten Schichtdicke erzeugten Pulverschicht. Die gewünschte Schichtdicke der Pulverschicht entspricht bei der ersten Pulverschicht dem Abstand zwischen der Arbeitsebene und der Substratplatte und bei jeder weiteren Pulverschicht dem Abstand zwischen der Arbeitsebene und der Oberfläche der vorangegangenen Pulverschicht.

Das Auftragsmedium erstreckt sich allein oder zusammen mit dem Schieber 8a ausgehend von der Arbeitsebene außerdem über eine wirksame Höhe, die die Mitnahme einer Pulvermenge erlaubt, die für den Auftrag mindestens einer gleichmäßigen Pulverschicht ausreicht.

Anstelle einer Bürste 8e kann auch ein anderes Auftragsmedium wie beispielsweise eine Gummilippe, Silikonlippe, Klinge, oder Walze verwendet werden.

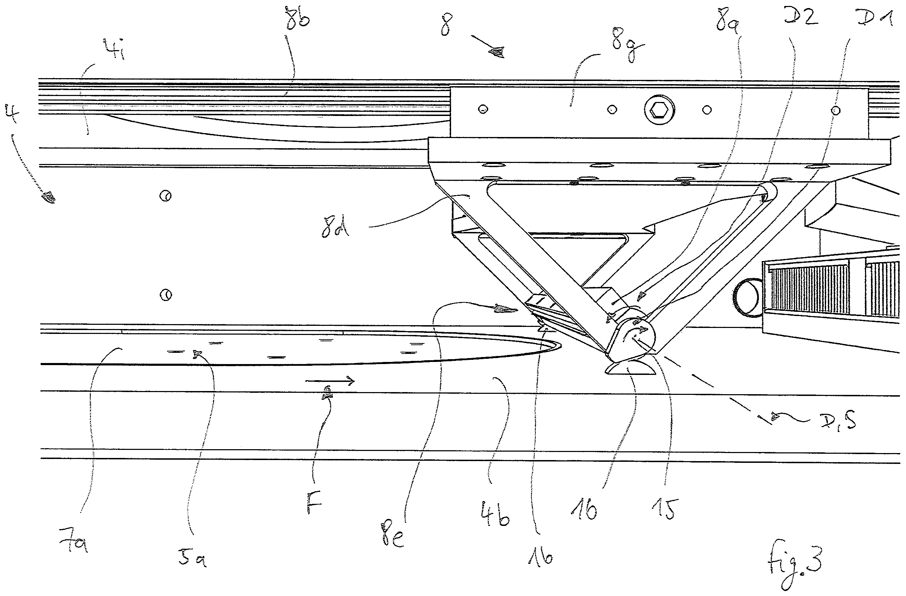

Zu Beginn der in Figur 2 dargestellten Hinfahrt befindet sich das als Bürste 8e ausgebildete und am Schieber 8a befestigte Auftragsmedium der Pulverauftragseinheit 8 im Bereich des Auffangbehälters 14. Hiervon ausgehend wird das über den Schieber 8a an der Traverse 8d aufgehängte Auftragsmedium gemeinsam mit dem Schieber 8a und der Traverse 8d in Fahrtrichtung F parallel zum Kammerboden 4b beziehungsweise der hiervon gebildeten Arbeitsebene in Richtung des als Bauteilbehälter betriebenen ersten Behälters 5a bewegt (siehe Figuren 3 bis 5). Während der Hinfahrt zum Bauteilbehälter fährt der Schieber 8a mit dem Auftragsmedium zunächst über den als Pulverbehälter des Bottom Up-Pulverfördermechanismus betriebenen zweiten Behälter 5b hinweg, um von diesem auf der Arbeitsebene bereitgestelltes Pulver parallel zur Arbeitsebene mitzunehmen und anschließend hiermit auf der Bauplattform des Bauteilbehälters eine erste Pulverschicht aufzutragen. Das in Figur 2 nicht dargestellte Pulver ist in Bezug auf die Fahrtrichtung F der Hinfahrt vor dem Schieber 8a und dem Auftragsmedium angeordnet, um hiervon mitgenommen und in dieser Richtung aufgetragen zu werden.

Der Schieber 8a und damit auch das hieran über den Klemmhalter drehfest angebrachte Auftragsmedium ist um eine zur Arbeitsebene parallel ausgerichtete Schwenkachse S schwenkbar an der Traverse 8d gelagert. Die Schwenkachse S verläuft außerdem parallel zur Längserstreckung des Schiebers 8a sowie des Auftragsmediums und damit quer, insbesondere rechtwinklig, zur Fahrtrichtung F. Dadurch kann der Schieber 8a gemeinsam mit dem Auftragsmedium ausgehend von der in Figur 2 dargestellten unverschwenkten Arbeitslage von der Arbeitsebene weg und in Richtung der Kammerdecke 4i geschwenkt werden. In der Arbeitslage ist der Abstand zwischen dem Auftragsmedium und der Arbeitsebene minimal oder das Auftragsmedium berührt die Arbeitsebene wie oben in Bezug auf die wirksame Länge beziehungsweise Höhe beschrieben. Hierbei entspricht die Arbeitslage einer stabilen Gleichgewichtslage des Schiebers 8a und des Auftragsmediums. Dabei ist der Schieber 8a bezüglich der Schwenkachse S pendelartig gelagert, das heißt der gemeinsame Massenschwerpunkt des Schiebers 8a und des Auftragsmediums liegt neben der Schwenkachse S. In der Arbeitslage liegt der Massenschwerpunkt vorzugsweise in Richtung der Schwenkachse S gesehen neben der Schwenkachse S, kann jedoch auch vertikal unter der Schwenkachse S angeordnet sein.

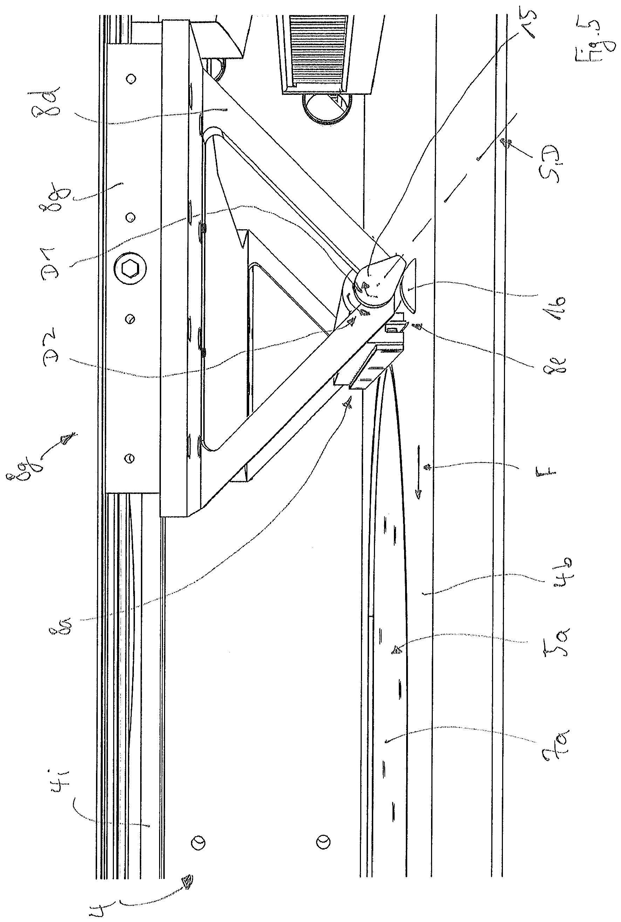

Des Weiteren umfasst die Pulverauftragseinheit 8 einen Mitnehmer 15, der eine gemeinsam mit dem Auftragsmedium parallel zu der Arbeitsebene in der jeweiligen Fahrtrichtung F bewegbare Komponente der Pulverauftragseinheit 8 bildet. Der Mitnehmer 15 ist pendelartig um eine Drehachse D in einer ersten Drehrichtung D1 (siehe Figur 3) und in einer entgegengesetzten zweiten Drehrichtung D2 (siehe Figur 5) drehbar an der Traverse 8d gelagert. Die Drehachse D ist parallel zur Arbeitsebene und quer, insbesondere rechtwinklig, zur Fahrtrichtung F ausgerichtet. Dadurch entspricht eine Drehbewegung des Mitnehmers 15 in der ersten Drehrichtung D1 einer Rollbewegung des Mitnehmers 15 in der Fahrtrichtung F der Hinfahrt. Jede Drehbewegung des Mitnehmers 15 ist eine Relativbewegung des Mitnehmers 15 in Bezug auf die Fahrtrichtung F. Im vorliegenden Ausführungsbeispiel wird die Drehachse D von der Schwenkachse S gebildet, so dass sie hiermit zusammenfällt. Der Mitnehmer 15 ist plattenförmig ausgebildet und weist eine längliche Form auf, insbesondere eine Tropfenform mit einem halbkreisförmigen und einem sich daran anschließenden kegelstumpfförmigen Abschnitt. Auch andere nichtrotationssymmetrische Formen sind denkbar. In seiner in Figur 2 dargestellten Ausgangslage, die einer stabilen Gleichgewichtslage entspricht, ist der Massenschwerpunkt des Mitnehmers 15 vertikal unter der Drehachse D angeordnet. Der Mitnehmer 15 ist in der Ausgangslage, wenn der Schieber 8a und das Auftragsmedium in der Arbeitslage sind und umgekehrt.

Der Schieber 8a und darüber auch das Auftragsmedium sind derart mit dem Mitnehmer 15 verbunden, dass jede von der Ausgangslage ausgehende Drehbewegung des Mitnehmers 15 in der ersten Drehrichtung D1, die insbesondere während der Hinfahrt ausgeführt wird (siehe Figur 3), auf den Schieber 8a beziehungsweise das Auftragsmedium übertragen wird und deren Verschwenken um die Schwenkachse S aus der Arbeitslage heraus bewirkt. Außerdem ist der Mitnehmer 15 bei jeder von der Ausgangslage ausgehenden Drehbewegung in der zweiten Drehrichtung D2, die insbesondere während der Rückfahrt ausgeführt wird (siehe Figur 5), sowie einer gegenläufigen Drehbewegung in der ersten Drehrichtung D1 zurück in die Ausgangslage von dem Schieber 8a beziehungsweise dem Auftragsmedium entkoppelt, so dass diese keine entsprechende Schwenkbewegung ausführen, sondern in der in den Figuren 2 und 5 gezeigten Arbeitslage verbleiben.

Die Figur 3 zeigt eine Ansicht der Pulverauftragseinheit 8 gemäß Figur 2 beim ersten Überfahren eines Anschlags 16 zum Verschwenken des Auftragsmediums am Ende der Hinfahrt. Der Schieber 8a und das Auftragsmedium wurden in der in Figur 3 dargestellten Lage bereits aus der Arbeitslage verschwenkt, nachdem beide über die Trägerplatte 7a beziehungsweise Bauplattform des ersten Behälters 5a hinweg bewegt wurden und dort die erste Pulverschicht (nicht dargestellt) aufgetragen wurde. Da für das Auftragen der ersten Pulverschicht nicht das gesamte auf der Hinfahrt mitgenommene Pulver aufgetragen wurde, befindet sich in Bezug auf die Fahrtrichtung F der Hinfahrt auf der Arbeitsebene noch ausreichend überschüssiges Pulver für das Auftragen einer zweiten Pulverschicht vor dem Auftragsmedium und dem Schieber 8a. Durch das Verschwenken des Schiebers 8a mit dem Auftragsmedium während der fortgeführten Hinfahrt und entlang einer vorbestimmten Strecke, wird ein Abstand des Schiebers 8a und des Auftragsmediums zur Arbeitsebene hergestellt, bei dem das bezüglich der ersten Pulverschicht überschüssige Pulver nicht weiter mitgenommen wird, sondern auf der Arbeitsebene liegen bleibt, so dass der Schieber 8a mit dem Auftragsmedium über das überschüssige Pulver hinweg fahren kann. Das Verschwenken des Schieber 8a und des Auftragsmediums zum Überfahren des überschüssigen Pulvers erfolgt im Sinne einer Rollbewegung in der Fahrtrichtung F der Hinfahrt über den entsprechenden Pulverhaufen aus überschüssigem Pulver hinweg, bei der deren unterhalb der Schwenkachse S angeordnete Teile ausgehend von der Arbeitslage zunächst in Richtung des Auffangbehälters 14 und damit entgegen der Fahrtrichtung F der Hinfahrt verschwenkt werden. Die Rollbewegung erfolgt insbesondere in Richtung eines Umkehrpunkts des Auftragsmediums, an dem die Hinfahrt endet und die Rückfahrt beginnt.

Der Anschlag 16 dient als mechanisches Mittel zum Verschwenken des Auftragsmediums und definiert durch seine Ausdehnung in Fahrtrichtung F zugleich die vorbestimmte Strecke. Hierfür ist der Anschlag 16 am Kammerboden 4b angeordnet und erstreckt sich hiervon ausgehend entlang der vorbestimmten Strecke mit einer konvex gekrümmten Oberfäche in Richtung der Kammerdecke 4i beziehungsweise der bewegten Komponenten der Pulverauftragseinheit 8. Außerdem ist der Anschlag 16 in einem Bewegungsbereich des Mitnehmers 15 aber außerhalb eines Bewegungsbereichs der übrigen in Fahrtrichtung F bewegten Komponenten der Pulverauftragseinheit 8 am Kammerboden 4b angeordnet. Dadurch kollidiert nur der Mitnehmer 15 sowohl bei der Hinfahrt als auch bei der Rückfahrt (siehe Figur 5) mit dem Anschlag 16, während die übrigen bewegten Komponenten, insbesondere der Schieber 8a und das Auftragsmedium, kollisionsfrei passieren können. Aufgrund der Kollision des Mitnehmers 15 mit dem Anschlag 16 und des sich hieraus entlang der vorbestimmten Strecke ergebenden Kontakts wird der Mitnehmer 15 bei der Hinfahrt und bei der Rückfahrt relativ zu seiner Bewegung in Fahrtrichtung F bewegt beziehungsweise um die Drehachse D gedreht. Diese Relativbewegung hat während der Hinfahrt und der Rückfahrt denselben Bewegungsumfang in jeweils entgegengesetzter Richtung. Durch die oben beschriebene freilaufartige Kopplung des Mitnehmers 15 mit dem Schieber 8a beziehungsweise Auftragsmedium wird jedoch nur die während der Hinfahrt durch den Kontakt mit dem Anschlag 16 bewirkte Relativbewegung des Mitnehmers 15 in ein Verschwenken des Auftragsmediums aus der Arbeitslage umgesetzt.

Während der Hinfahrt wird der Mitnehmer 15 entsprechend der Form des Anschlags 16 entlang der vorbestimmten Strecke ausgehend von seiner Ausgangslage (siehe Figur 2) zunächst in der ersten Drehrichtung D1 (siehe Figur 3) und anschließend in der zweiten Drehrichtung D2 zurück in die Ausgangslage gedreht. Die Drehbewegung zurück in die Ausgangslage erfolgt noch während des Kontakts oder spätestens nach Beendigung des Kontakts zwischen dem Mitnehmer 15 und dem Anschlag 16 als schwerkraftgetriebene Rückkehr in das der Ausgangslage entsprechende stabile Gleichgewicht. Auch eine federbeaufschlagte Lagerung des Mitnehmers 15 ist denkbar, wobei beispielsweise eine Drehfeder während der Drehbewegung D1 gespannt wird und sich zum Bewirken beziehungsweise Unterstützen der Rückkehr in die Ausgangslage entspannt. Bei der Drehbewegung in der ersten Drehrichtung D1 nimmt der Mitnehmer 15 den Schieber 8a beziehungsweise das Auftragsmedium mit und übertragt dadurch die Drehbewegung in deren in Figur 3 dargestelltes Verschwenken gegenüber der Arbeitslage. Im vorliegenden Ausführungsbeispiel erfolgt das Verschwenken in der ersten Drehrichtung D1. Das Verschwenken kann auch über die in Figur 3 dargestellte Lage hinaus erfolgen. Auch eine volle Umdrehung um die Schwenkachse S ist denkbar, wenn zwischen dem Mitnehmer 15 und dem Schieber 8a beziehungsweise Auftragsmedium ein Getriebe mit entsprechender Übersetzung vorgesehen ist. Wenn wie im vorliegenden Ausführungsbeispiel der Schieber 8a und das Auftragsmedium in der Arbeitslage ihren Massenschwerpunkt neben der Schwenkachse S haben und nicht vertikal unterhalb der Schwenkachse S, ist auch eine bezüglich der Schwenkachse S gespiegelte zweite Arbeitslage mit stabilem Gleichgewicht denkbar, in die der Schieber 8a und das Auftragsmedium im Sinne eines Umklappens verschwenkt werden können. Hierfür wäre dann am Schieber 8a ein zweites Auftragsmedium vorzusehen, das an einer dem ersten Auftragsmedium gegenüberliegenden Seite angeordnet ist. Wenn stattdessen ein dem Verschwenken entgegengesetztes Zurückschwenken in die Arbeitslage erfolgt, kann dies wie beim Mitnehmer 15 schwerkraftgetrieben als Rückkehr in das stabile Gleichgewicht oder aufgrund einer Federbeaufschlagung erfolgen.

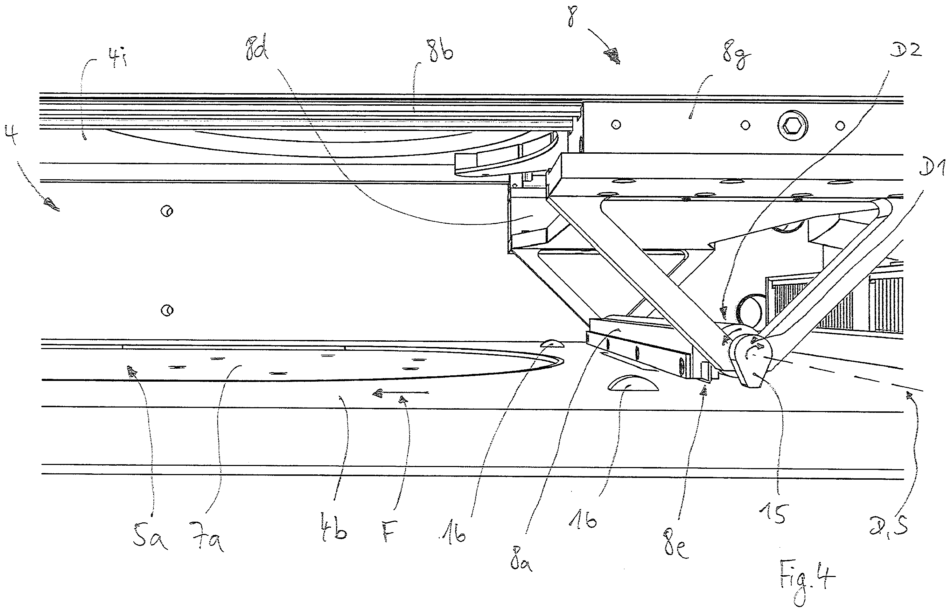

Die Figur 4 zeigt eine Ansicht der Pulverauftragseinheit 8 gemäß Figur 2 nach dem ersten Überfahren beziehungsweise Passieren des Anschlags 16 zu Beginn der Rückfahrt des Auftragsmediums. Der Mitnehmer 15 steht daher nicht mehr beziehungsweise noch nicht wieder in Kontakt mit dem Anschlag 16 und ist daher wieder in seiner Ausgangslage. Auch der Schieber 8a und das Auftragsmedium sind wieder in der Arbeitslage. Das nicht dargestellte überschüssige Pulver wurde überfahren und befindet sich in der Fahrtrichtung F der Rückfahrt vor dem Schieber 8a beziehungsweise Auftragsmedium und kann für das Auftragen der zweiten Pulverschicht mitgenommen werden.

Die Figur 5 zeigt eine Ansicht der Pulverauftragseinheit 8 gemäß Figur 2 beim zweiten Überfahren des Anschlags 16 während der Rückfahrt. Die aufgrund des entsprechenden Kontakts des Mitnehmers 15 mit dem Anschlag 16 während der Rückfahrt erfolgende Relativbewegung des Mitnehmers 15 wird wegen der oben beschriebenen Wirkverbindung zwischen dem Mitnehmer 15 und dem Schieber 8a beziehungsweise Auftragsmedium nicht übertragen, so dass der Schieber 8a und das Auftragsmedium wie in Figur 5 dargestellt auch entlang der vorbestimmten Strecke in der unverschwenkten Arbeitslage verbleiben. Mit anderen Worten wird die vom Mitnehmer 15 aufgrund des Kontakts mit dem Anschlag 16 ausgeführte Drehbewegung auf das Auftragsmedium also derart übertragen, dass das Auftragsmedium nur während der Hinfahrt um die Schwenkachse S verschwenkt wird. Dementsprechend führt die in Figur 5 dargestellte Drehbewegung des Mitnehmers 15 in der zweiten Drehrichtung D2 während der Rückfahrt also ebenso wenig zu einem Verschwenken des Schiebers 8a beziehungsweise Auftragsmediums wie die anschließend erfolgende Drehbewegung in der ersten Drehrichtung D1 zurück in die Ausgangslage des Mitnehmers 15. Dadurch kann das während der Hinfahrt im Wesentlichen im Bereich der vorbestimmten Strecke überfahrene und damit zurückgelassene überschüssige Pulver während der Rückfahrt auch entlang der vorbestimmten Strecke für den Auftrag der zweiten Pulverschicht in der Fahrtrichtung F der Rückfahrt mitgenommen werden.

Während der Rückfahrt werden der Schieber 8a und das Auftragsmedium erneut über die Bauplattform hinwegbewegt, um dort die zweite Pulverschicht aufzutragen. Hierbei kann außer dem von der Hinfahrt überschüssigen Pulver auch auf der Hinfahrt auf der Bauplattform oder dem Kammerboden 4b aufgetragenes Pulver mitgenommen werden. Dieses Pulver kann Spritzer aus aufgeschmolzenem Pulver enthalten und über den Pulverbehälter hinweg in den Pulverüberlauf geschoben werden, damit es möglichst nicht das Pulver des Pulverbehälters kontaminiert. Die Rückfahrt endet hierbei in der in Figur 2 dargestellten Position, von der aus eine weitere Hinfahrt beginnen kann.

Abweichend vom vorliegenden Ausführungsbeispiel können die Drehachse D und die Schwenkachse S auch parallel und voneinander beabstandet verlaufen. Ebenso ist es möglich, dass die Schwenkachse S nicht parallel zur Drehachse D ausgerichtet ist, beispielsweise parallel zur Fahrtrichtung F. In diesen Fällen ist der Mitnehmer 15 getriebeartig mit dem Schieber 8a beziehungsweise Auftragsmedium zu verbinden, um eine Drehbewegung des Mitnehmers 15 während der Hinfahrt in eine Schwenkbewegung zu übertragen.

Auch können wie im Ausführungsbeispiel anhand der Figuren 3 bis 5 angedeutet zwei Mitnehmer 15 und zwei Anschläge 16 vorgesehen werden, die in entsprechendem Abstand zueinander an gegenüberliegenden Enden des Schiebers 8a beziehungsweise Auftragsmediums angeordnet sind, um jeweils wie beschrieben zum Verschwenken des Schiebers 8a beziehungsweise Auftragsmediums zusammenzuwirken.

### Bezugszeichenliste

- 1: PBLS-Anlage
- 2: Scannereinheit
- 3: Tisch
- 4: Prozesskammer
- 4a: Deckel
- 4b: Kammerboden
- 4c: Seitenwand
- 4d: Einkoppelglas
- 4e: Rückwand
- 4f: Vorderwand
- 4g: Stirnwand
- 4h: Sichtfenster
- 4i: Kammerdecke
- 5a: erster Behälter
- 5b: zweiter Behälter
- 6a: erste Seitenwand
- 6b: zweite Seitenwand
- 7a: erste Trägerplatte
- 7b: zweite Trägerplatte
- 8: Pulverauftragseinheit
- 8a: Schieber
- 8b: Antriebseinheit
- 8c: Führungswagen
- 8d: Traverse
- 8e: Bürste
- 8f: Führungsschiene
- 8g: Antriebsschlitten
- 9: Kanal
- 9a: erste Öffnung
- 9b: zweite Öffnung
- 9c: dritte Öffnung
- 9d: Leiste
- 10: Schwenkarm
- 11: Zugmitteltrieb
- 12: Krafteinrichtung
- 13: Antrieb
- 14: Auffangbehälter
- 14a: Seitenwand
- 15: Mitnehmer
- 16: Anschlag
- D: Drehachse
- D1: erste Drehrichtung
- D2: zweite Drehrichtung
- F: Fahrtrichtung
- S: Schwenkachse

## Patentansprüche

1. Pulverauftragseinheit (8) für eine Pulverbettbasiertes Laserstrahlschmelzen Anlage (1), PBLS-Anlage, wobei die Pulverauftragseinheit (8) ein Auftragsmedium umfasst, das parallel zu einer Arbeitsebene der PBLS-Anlage (1) beweglich gelagert ist, um Pulver entlang der Arbeitsebene bewegen zu können, wobei ein Abstand des Auftragsmediums zu der Arbeitsebene veränderlich ist, indem das Auftragsmedium um eine Schwenkachse (S) schwenkbar gelagert ist, um das Auftragsmedium von der Arbeitsebene wegschwenken zu können, **dadurch gekennzeichnet, dass** die Pulverauftragseinheit (8) ein Mittel zum Verschwenken des Auftragsmediums aufweist, das derart ausgebildet ist und mit dem Auftragsmedium derart zusammenwirken kann, dass das Auftragsmedium während einer Hinfahrt zunächst unverschwenkt in einer Arbeitslage ist, so dass während der Hinfahrt in Fahrtrichtung (F) vor dem Auftragsmedium angeordnetes Pulver in Fahrtrichtung (F) bewegt werden kann, um eine erste Pulverschicht auf einer unterhalb der Arbeitsebene angeordneten Bauplattform aufzutragen, anschließend während der fortgeführten Hinfahrt entlang einer vorbestimmten Strecke gegenüber der Arbeitslage verschwenkt werden kann, so dass überschüssiges Pulver, das nach dem Auftragen der ersten Pulverschicht in Fahrtrichtung (F) vordem Auftragsmedium angeordnet ist, überfahren werden kann, und während einer entgegengesetzten Rückfahrt entlang der vorbestimmten Strecke unverschwenkt in der Arbeitslage ist, so dass während der Rückfahrt das in einer zur Hinfahrt entgegengesetzten Fahrtrichtung (F) vor dem Auftragsmedium angeordnete überschüssige Pulver in der entgegengesetzten Fahrtrichtung (F) bewegt werden kann, um eine zweite Pulverschicht auf der Bauplattform aufzutragen.

2. Pulverauftragseinheit (8) nach Anspruch 1, **dadurch gekennzeichnet, dass** die Schwenkachse (S) parallel zur Arbeitsebene und vorzugsweise parallel zur Längserstreckung des Auftragsmediums ausgerichtet ist.

3. Pulverauftragseinheit (8) nach Anspruch 1 oder 2, **dadurch gekennzeichnet, dass** das Mittel einen Anschlag (16) umfasst, der die vorbestimmte Strecke definiert, indem er während der Hinfahrt entlang der vorbestimmten Strecke in Kontakt mit einer in Fahrtrichtung (F) bewegten Komponente der Pulverauftragseinheit (8) steht und hierdurch das Auftragsmedium verschwenken kann.

4. Pulverauftragseinheit (5) nach Anspruch 3, **dadurch gekennzeichnet, dass** die bewegte Komponente als Mitnehmer (15) ausgebildet ist, der derart bewegbar gelagert ist, dass er aufgrund des Kontakts mit dem Anschlag (16) relativ zu seiner Bewegung in Fahrtrichtung (F) bewegbar ist, wobei der Mitnehmer (15) derart mit dem Auftragsmedium verbunden ist, dass eine vom Mitnehmer (15) aufgrund des Kontakts mit dem Anschlag (16) ausgeführte Bewegung auf das Auftragsmedium derart übertragbar ist, dass das Auftragsmedium nur während der Hinfahrt um die Schwenkachse (S) verschwenkbar ist.

5. Pulverauftragseinheit (8) nach Anspruch 4, **dadurch gekennzeichnet, dass** der Mitnehmer (15) um eine Drehachse (D) drehbar gelagert ist, wobei der Mitnehmer (15) derart mit dem Auftragsmedium verbunden ist, dass eine vom Mitnehmer (15) aufgrund des Kontakts mit dem Anschlag (16) ausgeführte Drehbewegung auf das Auftragsmedium derart übertragbar ist, dass das Auftragsmedium nur während der Hinfahrt um die Schwenkachse (S) verschwenkbar ist.

6. Pulverauftragseinheit (8) nach Anspruch 5, **dadurch gekennzeichnet, dass** die Drehachse (D) parallel zur Arbeitsebene und quer, insbesondere rechtwinklig, zur Fahrtrichtung (F) ausgerichtet ist und vorzugsweise die Schwenkachse (S) parallel zur Drehachse (D) ausgerichtet ist und insbesondere die Drehachse (D) von der Schwenkachse (S) gebildet wird und der Mitnehmer (15) gemeinsam mit dem Auftragsmedien in der ersten Drehrichtung (D1) verschwenkbar ist.

7. PBLS-Anlage (1) mit einer Prozesskammer (4), die einen Kammerboden (4b) aufweist, der die Arbeitsebene der PBLS-Anlage (1) bildet, und mit einer Pulverauftragseinheit (8), die in der Prozesskammer (4) angeordnet ist, **dadurch gekennzeichnet, dass** die Pulverauftragseinheit (8) nach einem der Ansprüche 1 bis 6 ausgebildet ist.

8. PBLS-Anlage (1) nach Anspruch 7, **dadurch gekennzeichnet, dass** das Mittel zum Verschwenken des Auftragsmediums am Kammerboden (4b) angeordnet ist, insbesondere neben einer Bauplattform der PBLS-Anlage (1).

9. Verfahren zum Auftragen von zwei aufeinander folgenden Pulverschichten in einem PBLS-Verfahren, umfassend die Schritte:
a) Bewegen eines in einer Arbeitslage angeordneten Auftragsmediums in einer Fahrtrichtung (F) parallel zu einer Arbeitsebene während einer Hinfahrt, wobei während der Hinfahrt in Fahrtrichtung (F) vor dem Auftragsmedium angeordnetes Pulver in Fahrtrichtung (F) bewegt wird, um eine erste Pulverschicht auf einer unterhalb der Arbeitsebene angeordneten Bauplattform aufzutragen,
b) Verschwenken des Auftragsmediums aus der Arbeitslage um eine Schwenkachse (S) nach dem Auftragen der ersten Pulverschicht auf der Bauplattform
**gekennzeichnet durch** die folgenden Schritte:
c) Überfahren von überschüssigem Pulver, das nach dem Auftragen der ersten Pulverschicht in Fahrtrichtung (F) vor dem Auftragsmedium angeordnet ist
d) Verschwenken des Auftragsmediums um die Schwenkachse (S) zurück in die Arbeitslage nach dem Überfahren des überschüssigen Pulvers
e) Bewegen des in der Arbeitslage angeordneten Auftragsmediums in einer zur Hinfahrt entgegengesetzten Fahrtrichtung (F) parallel zu der Arbeitsebene während einer Rückfahrt, wobei während der Rückfahrt das in der entgegengesetzten Fahrtrichtung (F) vor dem Auftragsmedium angeordnete überschüssige Pulver in der entgegengesetzten Fahrtrichtung (F) bewegt wird, um eine zweite Pulverschicht auf der Bauplattform aufzutragen.

## Claims

1. Powder application unit (8) for a powder bed-based laser melting system (1), PBLM system, wherein the powder application unit (8) comprises an application medium which is mounted to be movable in parallel with a working plane of the PBLM system (1) in order to be able to move powder along the working plane, wherein a distance of the application medium to the working plane can be changed in that the application medium is mounted to be pivotable about a pivot axis (S) in order to be able to pivot the application medium away from the working plane, **characterised in that** the powder application unit (8) comprises a means for pivoting the application medium which is configured and able to co-operate with the application medium such that the application medium is initially not pivoted in a working position during forward travel so that during forward travel powder arranged upstream of the application medium in the direction of travel (F) can be moved in the direction of travel (F) in order to apply a first powder layer to a construction platform arranged beneath the working plane, is then pivotable with respect to the working position during the continued forward travel along a predetermined path so that excess powder which is arranged upstream of the application medium in the direction of travel (F) after applying the first powder layer can be travelled over, and is not pivoted in the working position during an opposite return travel along the predetermined path so that during the return travel the excess powder arranged upstream of the application medium in a direction of travel (F) opposite the forward travel can be moved in the opposite direction of travel (F) in order to apply a second powder layer to the construction platform.

2. Powder application unit (8) as claimed in claim 1, **characterised in that** the pivot axis (S) is oriented in parallel with the working plane and preferably in parallel with the longitudinal extension of the application medium.

3. Powder application unit (8) as claimed in claim 1 or 2, **characterised in that** the means comprises a stop (16) which defines the predetermined path **in that**, during the forward travel along the predetermined path, it is in contact with a component of the powder application unit (8) moved in the direction of travel (F) and hereby is able to pivot the application medium.

4. Powder application unit (5) as claimed in claim 3, **characterised in that** the moved component is formed as an entrainer (15) which is mounted to be movable such that it is movable relative to its movement in the direction of travel (F) owing to the contact with the stop (16), wherein the entrainer (15) is connected to the application medium such that a movement performed by the entrainer (15) owing to the contact with the stop (16) is transferable to the application medium such that the application medium is pivotable about the pivot axis (S) only during the forward travel.

5. Powder application unit (8) as claimed in claim 4, **characterised in that** the entrainer (15) is mounted to be rotatable about an axis of rotation (D), wherein the entrainer (15) is connected to the application medium such that a rotational movement performed by the entrainer (15) owing to the contact with the stop (16) is transferable to the application medium such that the application medium is pivotable about the pivot axis (S) only during the forward travel.

6. Powder application unit (8) as claimed in claim 5, **characterised in that** the axis of rotation (D) is oriented in parallel with the working plane and transversely, in particular at right angles, to the direction of travel (F) and preferably the pivot axis (S) is oriented in parallel with the axis of rotation (D) and in particular the axis of rotation (D) is formed by the pivot axis (S) and the entrainer (15) is pivotable together with the application medium in the first rotational direction (D1).

7. PBLM system (1) having a process chamber (4) which comprises a chamber floor (4b) which forms the working plane of the PBLM system (1), and having a powder application unit (8) which is arranged in the process chamber (4), **characterised in that** the powder application unit (8) is formed as claimed in any one of claims 1 to 6.

8. PBLM system (1) as claimed in claim 7, **characterised in that** the means for pivoting the application medium is arranged on the chamber floor (4b), in particular next to a construction platform of the PBLM system (1).

9. Method for applying two successive powder layers in a PBLM method, comprising the steps of:
a) moving an application medium arranged in a working position in a direction of travel (F) in parallel with a working plane during forward travel, wherein during the forward travel powder arranged upstream of the application medium in the direction of travel (F) is moved in the direction of travel (F) in order to apply a first powder layer to a construction platform arranged beneath the working plane,
b) pivoting the application medium from the working position about a pivot axis (S) after applying the first powder layer to the construction platform,
**characterised by** the following steps:
c) travelling over excess powder which is arranged upstream of the application medium in the direction of travel (F) after applying the first powder layer,
d) pivoting the application medium about the pivot axis (S) back to the working position after travelling over the excess powder,
e) moving the application medium arranged in the working position in a direction of travel (F) opposite the forward travel in parallel with the working plane during return travel, wherein during the return travel the excess powder arranged upstream of the application medium in the opposite direction of travel (F) is moved in the opposite direction of travel (F) in order to apply a second powder layer to the construction platform.

## Revendications

1. Unité d'application de poudre (8) destinée à une installation de fusion à faisceau laser à base de lit de poudre, installation FLLP, l'unité d'application de poudre (8) comprenant un support d'application qui est monté de manière à être mobile parallèlement à un plan de travail de l'installation FLLP (1) afin de pouvoir déplacer la poudre le long du plan de travail, la distance du support d'application au plan de travail étant variable car le support d'application est monté de manière pivotante sur un axe de pivotement (S) afin de pouvoir faire pivoter le support d'application pour l'écarter du plan de travail, **caractérisée en ce que** l'unité d'application de poudre (8) comporte un moyen de pivotement du support d'application, lequel moyen de pivotement est conçu, et peut coopérer avec le support d'application, de manière à ce que le support d'application soit tout d'abord non pivoté dans une position de travail pendant le trajet aller de sorte que pendant le trajet aller la poudre, disposée devant le support d'application par référence au sens de déplacement (F), puisse être déplacée dans le sens de déplacement (F) afin d'appliquer une première couche de poudre sur une plate-forme de construction disposée au-dessous du plan de travail, puis puisse être pivotée sur une distance prédéterminée par rapport à la position de travail pendant la poursuite du trajet aller pour pouvoir passer au-dessus de l'excès de poudre, qui est disposé avant le support d'application, par référence au sens de déplacement (F), après l'application de la première couche de poudre, et soit non pivotée dans la position de travail pendant un trajet retour opposé sur la distance prédéterminée, pour pouvoir déplacer, pendant le trajet retour, l'excès de poudre, disposé devant le support d'application par référence à un sens de déplacement (F) opposé au trajet aller, dans le sens de déplacement opposé (F) pour appliquer une deuxième couche de poudre sur la plate-forme de fabrication.

2. Unité d'application de poudre (8) selon la revendication 1, **caractérisée en ce que** l'axe de pivotement (S) est orienté parallèlement au plan de travail et de préférence parallèlement à l'extension longitudinale du support d'application.

3. Unité d'application de poudre (8) selon la revendication 1 ou 2, **caractérisée en ce que** le moyen comprend une butée (16) qui définit la distance prédéterminée, **en ce qu'**il est en contact avec un composant de l'unité d'application de poudre (8), qui est déplacé dans le sens de déplacement (F), pendant le trajet aller sur la distance prédéterminée et peut ainsi faire pivoter le support d'application.

4. Unité d'application de poudre (5) selon la revendication 3, **caractérisée en ce que** le composant déplacé est conçu sous la forme d'un entraîneur (15) qui est monté de façon mobile de manière à pouvoir être déplacé, en raison du contact avec la butée (16), par rapport à son déplacement dans le sens de déplacement (F), l'entraîneur (15) étant relié au support d'application de sorte qu'un mouvement, effectué par l'entraîneur (15) en raison du contact avec la butée (16), puisse être transféré au support d'application de sorte que le support d'application ne puisse être pivoté sur l'axe de pivotement (S) que pendant le trajet aller.

5. Unité d'application de poudre (8) selon la revendication 4, **caractérisée en ce que** l'entraîneur (15) est monté à rotation sur un axe de rotation (D), l'entraîneur (15) étant relié au support d'application de sorte qu'un mouvement de rotation, réalisé par l'entraîneur (15) en raison du contact avec la butée (16), puisse être transféré au support d'application de sorte que le support d'application ne soit pivoté sur l'axe de pivotement (S) que pendant le trajet aller.

6. Unité d'application de poudre (8) selon la revendication 5, **caractérisée en ce que** l'axe de rotation (D) est orienté parallèlement au plan de travail et transversalement, en particulier perpendiculairement, au sens de déplacement (F), et de préférence l'axe de pivotement (S) est orienté parallèlement à l'axe de rotation (D) et en particulier l'axe de rotation (D) est formé par l'axe de pivotement (S) et l'entraîneur (15) peut pivoter conjointement avec le support d'application dans le premier sens de rotation (D1).

7. Installation FLLP (1) comprenant une chambre de traitement (4), qui comporte un fond de chambre (4b) qui forme le plan de travail de l'installation FLLP (1), et une unité d'application de poudre (8) qui est disposée dans la chambre de traitement (4), **caractérisée en ce que** l'unité d'application de poudre (8) est conçue selon l'une des revendications 1 à 6.

8. Installation FLLP (1) selon la revendication 7, **caractérisée en ce que** le moyen de pivotement du milieu d'application est disposé sur le fond de chambre (4b), en particulier à côté d'une plateforme de construction de l'installation FLLP (1).

9. Procédé d'application de deux couches de poudre successives dans un procédé FLLP, le procédé comprenant les étapes suivantes :
a) déplacer un support d'application, disposé dans une position de travail, dans une direction de déplacement (F) parallèle à un plan de travail pendant un trajet aller, la poudre, disposée devant le support d'application par référence au sens du déplacement (F), étant déplacée pendant le trajet aller dans le sens de déplacement (F) afin d'appliquer une première couche de poudre sur une plate-forme de construction disposée au-dessous du plan de travail,
b) faire pivoter le support d'application sur un axe de pivotement (S) depuis la position de travail après l'application de la première couche de poudre sur la plate-forme de construction,
**caractérisé par** les étapes suivantes :
c) passer par-dessus l'excès de poudre qui est disposé devant le support d'application par référence au sens de déplacement (F) après l'application de la première couche de poudre,
d) faire pivoter le support d'application sur l'axe de pivotement (S) pour le ramener dans la position de travail après le passage par-dessus l'excès de poudre,
e) déplacer le support d'application, disposé dans la position de travail, dans un sens de déplacement (F) opposé au trajet aller et parallèle au plan de travail pendant un trajet retour, l'excès de poudre, disposé devant le support d'application par référence au sens de déplacement opposé (F), étant déplacé pendant le trajet retour dans le sens de déplacement opposé (F) pour appliquer une deuxième couche de poudre sur la plate-forme de construction.
